# EUROPEAN PATENT APPLICATION

(11) **EP 4 572 295 A1**
(43) Date of publication of application: **18.06.2025**
(21) Application number: 23851271.9
(22) Date of filing: 28.04.2023
(51) Int. Cl.: H04L 67/52

(54) **COMMUNICATION METHOD AND COMMUNICATION APPARATUS**

(30) Priority: 09.08.2022 CN 202210952597; 17.01.2023 CN 202310096914
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN)
(74) Representative: Gill Jennings & Every LLP
(86) International application number: PCT/CN2023/091773
(87) International publication number: WO 2024/032041

(57) **Abstract**

This application provides a communication method and a communication apparatus. A first core network device may determine, based on whether a first parameter of a terminal device meets a first condition indicated by first condition information of a first service, whether to stop the terminal device from obtaining the first service. If the first parameter does not meet the first condition indicated by the first condition information of the first service, the first core network device sends first information, where the first information is used to stop the terminal device from obtaining the first service.

## Description

This application claims priorities to Chinese Patent Application No. 202210952597.4, filed with the China National Intellectual Property Administration on August 9, 2022 and entitled "COMMUNICATION METHOD AND COMMUNICATION APPARATUS", and to Chinese Patent Application No. 202310096914.1, filed with the China National Intellectual Property Administration on January 17, 2023 and entitled "COMMUNICATION METHOD AND COMMUNICATION APPARATUS", which are incorporated herein by reference in their entireties.

### TECHNICAL FIELD

This application relates to the communication field, and more specifically, to a communication method and a communication apparatus in the communication field.

### BACKGROUND

A terminal device can obtain a service at a specific location. After the terminal device obtains the service, if the terminal device does not need the service, but a network device still provides the service for the terminal device, a resource waste is caused. Therefore, how the network device stops the service for the terminal device is an urgent problem to be resolved.

### SUMMARY

Embodiments of this application provide a communication method and a communication apparatus, to stop a first service for a terminal device.

According to a first aspect, a communication method is provided. The communication method is applicable to a first core network device, and includes: obtaining first condition information of a first service, where the first condition information indicates a first condition for obtaining the first service; obtaining a first parameter of a terminal device, where the first parameter corresponds to the first condition information of the first service; and sending first information when the first parameter does not meet the first condition, where the first information is used to stop the terminal device from obtaining the first service.

In the foregoing solution, the first core network device may determine, based on whether the first parameter of the terminal device meets the first condition indicated by the first condition information of the first service, whether to stop the terminal device from obtaining the first service. If the first parameter does not meet the first condition indicated by the first condition information of the first service, the first core network device sends first information, where the first information is used to stop the terminal device from obtaining the first service.

Optionally, the first core network device is the session management device.

Optionally, the first core network device is the mobility management device.

Optionally, that the first core network device sends first information includes: The first core network device sends the first information to the terminal device. Optionally, if the first core network device is the session management device, that the first core network device sends first information includes: The first core network device sends the first information to a user plane device. Optionally, if the first core network device is the mobility management device, that the first core network device sends first information includes: The first core network device sends the first information to a session management device or a policy management device.

Optionally, the first core network device may send the first information before establishing a session for the first service for the terminal device, or send the first information after establishing the session for the first service for the terminal device. Optionally, the first core network device may send the first information before modifying a session for the first service for the terminal device, or send the first information after modifying the session for the first service for the terminal device.

Optionally, the first service is a personal internet of things network (personal IoT network, PIN)-related service.

In some possible implementations, the first condition information includes time information and/or location information.

That is, when the first condition information includes the time information, the first parameter is a time-related parameter. In this way, it may be determined, based on the time-related parameter of the terminal device, whether the first condition corresponding to time is met, so that the first service for the terminal device may be managed from a time dimension. The first condition information may include the location information. In this case, the first parameter is a location-related parameter. In this way, it may be determined, based on the location-related parameter of the terminal device, whether the first condition corresponding to a location is met, so that the first service for the terminal device may be managed from a location dimension. Alternatively, the first condition information may include the time information and the location information, and the first parameter is parameters related to time and location. In this way, it may be determined, based on the parameters related to the time and the location of the terminal device, whether the first condition corresponding to the time and the location is met. Therefore, the first service for the terminal device may be managed from a time dimension and a location dimension.

In some possible implementations, the first condition information includes the location information, and the location information is tracking area information, coordinate information, or cell identifier information.

Optionally, the location information is the tracking area information, and the tracking area information indicates a tracking area range in which the first service is available. That is, the first condition includes the tracking area range in which the first service is available.

Optionally, the location information is the coordinate information, and the coordinate information indicates a coordinate range in which the first service is available. That is, the first condition includes the coordinate range in which the first service is available.

Optionally, the location information is the cell identifier information, and the cell identifier information indicates a cell range in which the first service is available. That is, the first condition includes the cell range in which the first service is available.

In some possible implementations, when the location information is the coordinate information, the first condition includes a coordinate range in which the first service is available;
the obtaining a first parameter of a terminal device includes:
sending a first message to a location management device, where the first message is used to obtain coordinates of the terminal device; and
obtaining the coordinates of the terminal device from the location management device, where the first parameter includes the coordinates of the terminal device; and
the sending first information when the first parameter does not meet the first condition includes:
   sending the first information when the coordinates of the terminal device are not within the coordinate range in which the first service is available.

In the foregoing solution, the first core network device may send the first message to the location management device, to request the coordinates of the terminal device. The first core network device may obtain the coordinates of the terminal device from the location management device, and send the first information if the coordinates of the terminal device are not within the coordinate range in which the first service is available.

In some possible implementations, when the location information is the cell identifier information, the first condition includes a cell range in which the first service is available;
the obtaining a first parameter of a terminal device includes:
sending a second message to an access network device corresponding to the terminal device, where the second message is for requesting a cell in which the terminal device is located; and
obtaining, from the access network device, the cell in which the terminal device is located, where the first parameter includes the cell in which the terminal device is located; and
the sending first information when the first parameter does not meet the first condition includes:
   sending the first information if the cell in which the terminal device is located is not within the cell range in which the first service is available.

In the foregoing solution, the first core network device may send the second message to the access network device corresponding to the terminal device, to request the cell in which the terminal device is located. The first core network device may obtain, from the access network device, the cell in which the terminal device is located, and send the first information if the cell in which the terminal device is located is not within the cell range in which the first service is available.

In some possible implementations, when the location information is the tracking area information, the first condition includes a tracking area range in which the first service is available;
the obtaining a first parameter of a terminal device includes:
sending a third message to a mobility management device corresponding to the terminal device, where the third message is for requesting a tracking area of the terminal device; and
obtaining the tracking area of the terminal device from the mobility management device, where the first parameter includes the tracking area of the terminal device; and
the sending first information when the first parameter does not meet the first condition includes:
   sending the first information when the tracking area of the terminal device is not within the tracking area range in which the first service is available.

In the foregoing solution, the first core network device may send the second message to the access network device corresponding to the terminal device, to request the cell in which the terminal device is located. The first core network device may obtain, from the access network device, the cell in which the terminal device is located, and send the first information if the cell in which the terminal device is located is not within the cell range in which the first service is available.

In some possible implementations, the first condition information includes the time information, and the time information is time period information or use duration information. Optionally, the time information may alternatively be start time and/or end time.

Optionally, the first condition information includes the time information, the time information is the time period information, and the time period information indicates a time period range in which the first service is available. That is, the first condition includes the time period range in which the first service is available.

Optionally, the first condition information is the use duration information, and the use duration information indicates duration for which the first service is available. That is, the first condition includes the duration for which the first service is available.

In some possible implementations, when the time information is the time period information, and the first condition includes a time period range in which the first service is available, the first parameter includes current time at which the first core network device serves the terminal device with the first service; and
the sending first information when the first parameter does not meet the first condition includes:
sending the first information when the current time at which the first core network device serves the terminal device with the first service is not within the time period range in which the first service is available.

In the foregoing solution, the first core network device may obtain the current time at which the first core network device serves the terminal device with the first service, and send the first information if the current time at which the first core network device serves the terminal device with the first service is not within the time period range in which the first service is available.

In some possible implementations, when the time information is the use duration information, the first condition includes duration for which the first service is available;
the obtaining a first parameter of a terminal device includes:
starting a first timer, where the first timer is used to obtain duration for which the terminal device uses the first service, and the first parameter includes the duration for which the terminal device uses the first service; and
the sending first information when the first parameter does not meet the first condition includes:
   sending the first information when the duration for which the terminal device uses the first service is greater than the duration for which the first service is available.

In the foregoing solution, the first core network device may start the first timer, where the first timer is used to obtain the duration for which the terminal device uses the first service; and send the first information if the duration for which the terminal device uses the first service is greater than the duration for which the first service is available.

Optionally, the first condition information includes location information and time information. Optionally, when the location information is tracking area information, and the time information is time period information, the first condition includes a tracking area range in which the first service is available and a time period range in which the first service is available. The first parameter includes a tracking area of the terminal device and current time at which the first core network device serves the terminal device with the first service. If the tracking area of the terminal device is not within the tracking area range in which the first service is available, and/or the current time at which the first core network device serves the terminal device with the first service is not within the time period range in which the first service is available, the first core network device sends the first information.

Optionally, the first condition information includes location information and time information. Optionally, when the location information is tracking area information, and the time information is use duration information, the first condition includes a tracking area range in which the first service is available and duration for which the first service is available. The first parameter includes a tracking area of the terminal device and duration for which the terminal device uses the first service. If the tracking area of the terminal device is not within the tracking area range in which the first service is available, and/or the duration for which the terminal device uses the first service is greater than the duration for which the first service is available, the first core network device sends the first information.

Optionally, the first condition information includes location information and time information. When the location information is coordinate information, and the time information is time period information, the first condition includes a coordinate range in which the first service is available and a time period range in which the first service is available. The first parameter includes coordinates of the terminal device and current time at which the first core network device serves the terminal device with the first service. If the coordinates of the terminal device are not within the coordinate range in which the first service is available, and/or the current time at which the first core network device serves the terminal device with the first service is not within the time period range in which the first service is available, the first core network device sends the first information.

Optionally, the first condition information includes location information and time information. When the location information is coordinate information, and the time information is use duration information, the first condition includes a coordinate range in which the first service is available and duration for which the first service is available. The first parameter includes coordinates of the terminal device and duration for which the terminal device uses the first service. If the coordinates of the terminal device are not within the coordinate range in which the first service is available, and/or the duration for which the terminal device uses the first service is greater than the duration for which the first service is available, the first core network device sends the first information.

Optionally, the first condition information includes location information and time information. When the location information is cell identifier information, and the time information is time period information, the first condition includes a cell range in which the first service is available and a time period range in which the first service is available. The first parameter includes a cell in which the terminal device is located and current time at which the first core network device serves the terminal device with the first service. If the cell in which the terminal device is located is not within the cell range in which the first service is available, and/or the current time at which the first core network device serves the terminal device with the first service is not within the time period range in which the first service is available, the first core network device sends the first information.

Optionally, the first condition information includes location information and time information. When the location information is cell identifier information, and the time information is use duration information, the first condition includes a cell range in which the first service is available and duration for which the first service is available. The first parameter includes a cell in which the terminal device is located and duration for which the terminal device uses the first service. If the cell in which the terminal device is located is not within the cell range in which the first service is available, and/or the duration for which the terminal device uses the first service is greater than the duration for which the first service is available, the first core network device sends the first information.

In some possible implementations, the method further includes: obtaining a session request message, where the session request message includes at least one of a data network name, slice information, a session type, or a service identifier of the first service; and
the obtaining first condition information of a first service includes:
obtaining the first condition information of the first service based on the session request message.

Optionally, the obtaining the first condition information of the first service based on the session request message includes: obtaining the first condition information of the first service based on the service identifier of the first service in the session request message.

Optionally, if the first service is the PIN-related service, the identifier of the first service may be a PIN identifier (identity, ID).

Optionally, the obtaining the first condition information of the first service based on the session request message includes: determining the first condition information of the first service based on the data network name and the slice information in the session request message.

Optionally, the session request message may be a session establishment request message or a session modification request message.

Optionally, the slice information indicates S-NSSAI of the first service.

Optionally, the data network name is a data network name of the first service.

Optionally, the slice information is slice information of the first service.

In some possible implementations, the session request message further includes the first condition information of the first service.

In this way, the first core network device may obtain the first condition information of the first service from the session request message.

In some possible implementations, if the session request message includes the service identifier of the first service,
the obtaining the first condition information of the first service based on the session request message includes:
obtaining the first condition information of the first service based on the service identifier of the first service in the session request message.

Optionally, the communication method further includes: determining the service identifier of the first service based on the data network name and the slice information in the session request message; and determining the first condition information of the first service based on the determined service identifier of the first service.

In some possible implementations, the method further includes: sending a fourth message to a unified data management device, where the fourth message is used to subscribe to condition information of a service from the unified data management device; and
receiving condition information of each of at least one service from the unified data management device, where each service corresponds to one piece of condition information; and
the obtaining the first condition information of the first service based on the service identifier of the first service in the session request message includes:
   determining the condition information of the first service from the condition information of each of the at least one service based on the service identifier of the first service in the session request message.

In the foregoing solution, the first core network device may subscribe to the condition information of the service from the unified data management device, the unified data management device may send the condition information of each of the at least one service to the first core network device, and the first core network device may determine the first condition information of the first service from the condition information of each of the at least one service based on the service identifier of the first service.

In some possible implementations, if the first core network device is the mobility management device, the method further includes:
receiving a fifth message from the terminal device, where the fifth message is used to register with a core network that provides the first service, and the fifth message includes the service identifier of the first service;
sending a sixth message to a unified data management device, where the sixth message is for requesting the first condition information of the first service identified by the service identifier of the first service; and
obtaining, from the unified data management device, the first condition information of the first service identified by the service identifier; and
the obtaining the first condition information of the first service based on the service identifier of the first service in the session request message includes:
   determining the first condition information of the first service corresponding to the service identifier of the first service in the session request message.

In the foregoing solution, when the first core network device receives the fifth message that is sent by the terminal device and that is used for the registration, the first core network device may send, to the unified data management device based on the service identifier of the first service in the fifth message, the sixth message for requesting the first condition information of the first service identified by the first service identifier. In this way, after obtaining the condition information of each of the at least one service, and receiving the session request message sent by the terminal device, the first core network device determines the first condition information of the first service from the condition information of each of the at least one service based on the service identifier of the first service in the session request message.

In some possible implementations, if the first core network device is the mobility management device,
the sending first information includes:
sending the first information to the session management device or the policy management device, where the first information specifically indicates that the first service for the terminal device does not meet the first condition.

In the foregoing solution, if determining that the first parameter does not meet the first condition, the mobility management device may send the first information to the session management device, where the first information indicates that the first service for the terminal device does not meet the first condition. In this way, the session management device may determine, based on the first information, to stop the first service for the terminal device, and send a first instruction to the user plane device, to indicate the user plane device to stop sending the first service to the terminal device. If determining that the first parameter does not meet the first condition, the mobility management device may send the first information to the policy management device, where the first information indicates that the first service for the terminal device does not meet the first condition. In this way, the policy management device may generate a session policy based on the first information, and send the session policy to the session management device, and the session management device may send a first instruction to the user plane device according to the session policy, to indicate the user plane device to stop sending the first service to the terminal device.

In some possible implementations, the method further includes: sending the service identifier of the first service to the session management device or the policy management device, where the first information specifically indicates that the first service identified by the service identifier does not meet the first condition.

Optionally, the mobility management device may simultaneously send the first information and the service identifier of the first service to the session management device, or separately send the first information and the service identifier of the first service.

Optionally, the mobility management device may simultaneously send the first information and the service identifier of the first service to the policy management device, or separately send the first information and the service identifier of the first service.

In some possible implementations, the method further includes: receiving a seventh message sent by the policy management device, where the seventh message is used to subscribe to whether the first service identified by the service identifier meets the first condition, and the first core network device is configured to send the first information to the policy management device.

In the foregoing solution, after the policy management device subscribes to whether the first service identified by the service identifier meets the first condition, the mobility management device may send the first information to the policy management device.

In some possible implementations, if the first core network device is the session management device, the method further includes:
the sending first information includes:
sending the first information to a user plane device, where the first information specifically indicates the user plane device to stop sending the first service to the terminal device.

In the foregoing solution the session management device may send the first information to the user plane device, where the first information indicates the user plane device to stop sending the first service to the terminal device.

In some possible implementations, the method further includes:
sending the service identifier of the first service to the user plane device, where the first information specifically indicates the user plane device to stop sending, to the terminal device, the first service identified by the service identifier.

In the foregoing solution, the session management device may send the service identifier of the first service and the first information to the user plane device, where the first information indicates the user plane device to stop sending, to the terminal device, the first service identified by the service identifier. In this way, a case in which the user plane device cannot determine which service to stop sending to the terminal device is avoided.

In some possible implementations, the session request message further includes a service identifier of a second service, and the session request message is used to establish a session for the first service and the second service.

In the foregoing solution, the terminal device may include service identifiers of the two services in one session request message. In this way, the first core network device may establish a same session for the two services based on the session request message. In this way, it is avoided that different sessions need to be established for different services, thereby helping reduce signaling overheads.

Optionally, the session request message may further include a service identifier of another service. In this way, the session establishment request message is used to establish one session corresponding to a plurality of services.

Optionally, the data network name in the session request message is a data network name of the first service and the second service.

Optionally, the slice information in the session request message is slice information of the first service and the second service.

In some possible implementations, the method further includes:
sending second information to the user plane device, where the second information indicates the user plane device to stop sending, to the terminal device, the second service identified by the service identifier of the second service; and
if services corresponding to the session are the first service and the second service, the method further includes:
   sending third information to the user plane device, where the third information is used to release the session.

In the foregoing solution, if the first service does not meet the first condition, the first information needs to be sent, and if the second service does not meet a second condition, the second information needs to be sent. In this case, the session management device may send the third information to the user plane device, where the third information is used to release the session. That is, when no service corresponding to the session meets the condition, the session may be released. If a service meets the condition, but a service does not meet the condition, the session is not released, but the service that does not meet the condition is ended.

In some possible implementations, if the first core network device is the session management device, the obtaining first condition information of a first service includes: receiving the first condition information of the first service from a mobility management device.

In the foregoing solution, the session management device may obtain the first condition information of the first service from the mobility management device. For example, the mobility management device may receive the session request message from the terminal device, where the session request message includes the first condition information of the first service. The mobility management device may send the session request message to the mobility management device, and the mobility management device obtains the first condition information of the first service from the session request message. Alternatively, the mobility management device obtains the condition information of each of the at least one service from the unified data management device. The mobility management device determines the service identifier of the first service based on the session request message, determines the first condition information of the first service from the condition information of each of the at least one service based on the service identifier of the first service, and sends the first condition information of the first service to the session management device, for example, includes the first condition information of the first service in the session request message.

According to a second aspect, a communication method is provided. The method is applicable to a session management device, and includes:
receiving first information from a mobility management device, where the first information indicates that a first service for a terminal device does not meet a first condition; and sending a first instruction to a user plane device based on the first information, where the first instruction indicates the user plane function device to stop sending the first service to the terminal device.

In the foregoing solution, the session management device may send the first instruction to the user plane device based on the first information, and the user plane device may stop, based on the first instruction, sending the first service to the terminal device. Therefore, a method for stopping a service for the terminal device is provided.

In some possible implementations, the communication method further includes: receiving a service identifier of the first service from the mobility management device, where the first information specifically indicates that the first service identified by the service identifier does not meet the first condition.

In the foregoing solution, the session management device may receive the first information and the service identifier of the first service from the mobility management device. In this case, the first information may indicate that the first service identified by the service identifier does not meet the first condition. In this way, the user plane device may determine to stop sending, to the terminal device, the first service identified by the service identifier.

In some possible implementations, the communication method further includes:
receiving second information from the mobility management device, where the second information indicates that a second service for the terminal device does not meet a second condition; and
sending a second instruction to the user plane device based on the second information, where the second instruction indicates the user plane device to stop sending the second service to the terminal device; and
if services corresponding to a session are the first service and the second service, the communication method further includes:
   sending third information to the user plane device, where the third information is used to release the session.

In the foregoing solution, if the session management device receives both the first information and the second information, it indicates that the first service for the terminal device does not meet the first condition, and the second service for the terminal device does not meet the second condition. In this case, the session management device may send the third information to the user plane device, where the third information is used to release the session. That is, when no service corresponding to the session meets the condition, the session may be released. If a service meets the condition, but a service does not meet the condition, the session is not released, but the service that does not meet the condition is ended.

In some possible implementations, the first service is a PIN-related service.

According to a third aspect, a communication method is provided. The communication method is applicable to a terminal device, and includes:
obtaining a service identifier of a first service, a data network name of the first service, slice information of the first service, and a session type; and
sending a session request message to a mobility management device, where the session request message includes: the service identifier of the first service, the data network name, the slice information, and the session type, where the session request message is used to generate a session.

In some possible implementations, the obtaining a service identifier of a first service, a data network name of the first service, and slice information of the first service includes:
sending a first subscription request to an application device, where the first subscription request is used to subscribe to the first service; and
receiving a first subscription response of the first subscription request from the application device, where the first subscription response includes the service identifier, the data network name, and the slice information.

In some possible implementations, the first subscription response further includes first condition information of the first service, where the first condition information indicates a first condition for obtaining the first service.

In some possible implementations, the obtaining a service identifier of a first service, a data network name of the first service, and slice information of the first service includes:
sending a first subscription request to an application device, where the first subscription request is used to subscribe to the first service, the application device is configured to send subscription information of the first service to a unified data management device via a capability exposure device, and the subscription information includes the service identifier, the data network name, and the slice information; and
receiving the subscription information sent by the unified data management device.

In some possible implementations, the subscription information further includes first condition information of the first service, where the first condition information indicates a first condition for obtaining the first service.

In some possible implementations, the obtaining a service identifier of a first service, a data network name of the first service, and slice information of the first service includes:
sending a first subscription request to an application device, where the first subscription request is used to subscribe to the first service, the application device is configured to send subscription information of the first service to a unified data management device via a capability exposure device, the unified data management device is configured to send the subscription information to a policy control device, and the subscription information includes the service identifier, the data network name, and the slice information; and
receiving, by using the mobility management device, rule information sent by the policy control device, where the rule information includes the subscription information.

In some possible implementations, the subscription information further includes first condition information of the first service, where the first condition information indicates a first condition for obtaining the first service.

In some possible implementations, the obtaining a service identifier of a first service, a data network name of the first service, and slice information of the first service includes:
sending a fifth message to an access network device corresponding to the terminal device, where the fifth message is used to register with a core network that provides the first service; and
receiving, from the access network device, a response message of the fifth message sent by the mobility management device, where the response message of the fifth message includes the service identifier, the data network name, and the slice information.

In some possible implementations, the response message of the fifth message further includes first condition information, where the first condition information indicates a first condition for obtaining the first service.

In some possible implementations, the session request message further includes the first condition information of the first service.

In some possible implementations, the first service is a PIN-related service.

According to a fourth aspect, a communication method is provided. The communication method is applicable to a mobility management device, and the communication method further includes:
obtaining condition information of each of at least one service, where the condition information of each service indicates a condition for obtaining each service;
obtaining a service identifier of a first service;
determining first condition information of the first service from the condition information of each of the at least one service based on the service identifier of the first service; and
sending the first condition information to a session management device.

In some possible implementations, the obtaining condition information of each of at least one service includes:
sending a fourth message to a unified data management device, where the fourth message is used to subscribe to condition information of a service from the unified data management device; and
receiving the condition information of each of the at least one service from the unified data management device.

In some possible implementations, the obtaining condition information of each of at least one service includes:
receiving a fifth message from the terminal device, where the fifth message is used to register with a core network that provides the first service, and the fifth message includes the service identifier of the first service; and
obtaining, from the unified data management device, the first condition information of the first service identified by the service identifier.

In some possible implementations, the first service is a PIN-related service.

Specifically, for the fifth aspect, refer to descriptions of the first aspect. To avoid repetition, details are not described again.

According to a fifth aspect, a communication method is provided. The communication method is applicable to a policy control device, and includes:
receiving first information from a mobility management device, where the first information indicates that a first service for a terminal device does not meet a first condition; and
sending a session policy to a session management device based on the first information, where the session policy is used by the session management device to determine to stop sending the first service to the terminal device.

In some possible implementations, the first service is a PIN-related service.

In some possible implementations, the communication method further includes:
receiving a service identifier of the first service from the mobility management device, where the first information specifically indicates that the first service identified by the service identifier does not meet the first condition.

In some possible implementations, the communication method further includes:
sending a seventh message to the mobility management device, where the seventh message is used to subscribe to whether the first service meets the first condition.

The receiving first information from a mobility management device includes:
receiving the first information from the mobility management device based on the seventh message.

In some possible implementations, before the sending a seventh message to the mobility management device, the method further includes:
receiving the service identifier of the first service from the session management device.

In some possible implementations, the first service is a PIN-related service.

Specifically, for the fifth aspect, refer to descriptions of the first aspect. To avoid repetition, details are not described again.

According to a sixth aspect, this application provides a communication apparatus. The apparatus has a function of implementing behavior of each device in each of the foregoing aspects and the possible implementations of the foregoing aspects. The function may be implemented by hardware, or may be implemented by hardware executing corresponding software. The hardware or the software includes one or more modules or units corresponding to the foregoing function, for example, a determining module or unit, or a transceiver module or unit.

According to a seventh aspect, this application provides an electronic device. The apparatus includes a processor, the processor is coupled to a memory, the memory is configured to store a computer program or instructions, and the processor is configured to execute the computer program or the instructions stored in the memory, so that the methods in the foregoing aspects and the possible implementations of the foregoing aspects are performed.

For example, the processor is configured to execute the computer program or the instructions stored in the memory, to enable the apparatus to perform the methods in the foregoing aspects and the possible implementations of the foregoing aspects.

Optionally, the apparatus includes one or more processors.

Optionally, the apparatus may further include the memory coupled to the processor.

Optionally, the apparatus may include one or more memories.

Optionally, the memory and the processor may be integrated together or disposed separately.

Optionally, the apparatus may further include a transceiver.

According to an eighth aspect, this application provides an electronic device, including one or more processors, a memory, and one or more computer programs. The one or more computer programs are stored in the memory. The one or more computer programs include instructions. When the instructions are executed by the electronic device, the one or more processors are enabled to perform the method in any one of the foregoing aspects or the possible implementations of the foregoing aspects, or the method described in any one of embodiments of this application.

Optionally, the electronic device may further include a touchscreen and/or a camera. The touchscreen includes a touch-sensitive surface and a display.

According to a ninth aspect, this application provides a computer-readable storage medium, including computer instructions. When the computer instructions are run on an electronic device, the electronic device is enabled to perform the method in any one of the foregoing aspects or the possible methods of the foregoing aspects, or the method described in any one of embodiments of this application.

According to a tenth aspect, this application provides a computer program product. When the computer program product runs on an electronic device, the electronic device is enabled to perform the method in any one of the foregoing aspects or the possible methods of the foregoing aspects, or the method described in any one of embodiments of this application.

According to an eleventh aspect, this application provides an apparatus, including a unit configured to perform the method described in any one of embodiments of this application.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of a communication method according to an embodiment of this application;
FIG. 4A and FIG. 4B are a diagram of another communication method according to an embodiment of this application;
FIG. 5 is a diagram of still another communication method according to an embodiment of this application;
FIG. 6A and FIG. 6B are a diagram of still another communication method according to an embodiment of this application;
FIG. 7A and FIG. 7B are a diagram of still another communication method according to an embodiment of this application;
FIG. 8A and FIG. 8B are a diagram of still another communication method according to an embodiment of this application;
FIG. 9A and FIG. 9B are a diagram of still another communication method according to an embodiment of this application;
FIG. 10A and FIG. 10B are a diagram of still another communication method according to an embodiment of this application; and
FIG. 11 is a block diagram of a communication apparatus according to an embodiment of this application.

### DESCRIPTION OF EMBODIMENTS

The following describes technical solutions in embodiments of this application with reference to the accompanying drawings in embodiments of this application.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

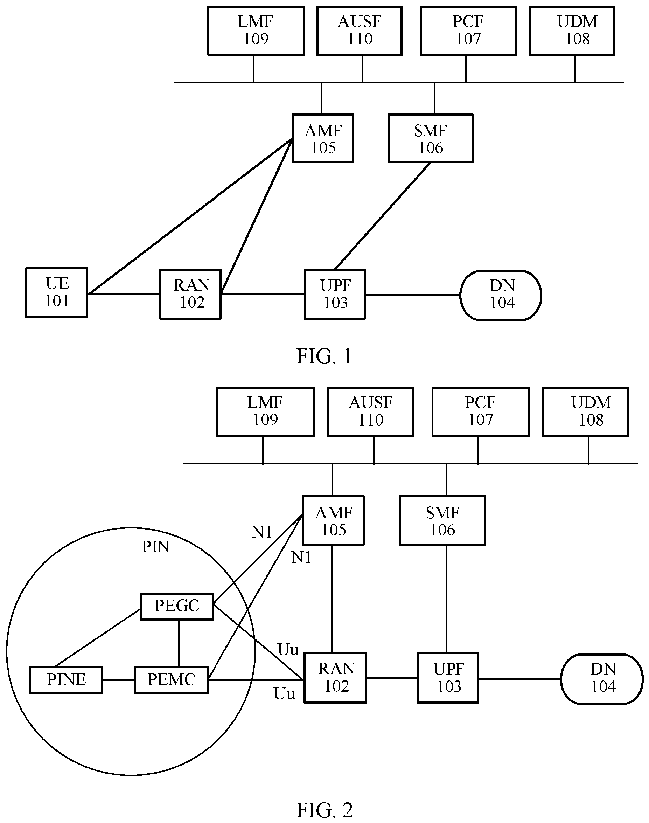

FIG. 1 and FIG. 2 are diagrams of two system architectures applicable to embodiments of this application. As shown in FIG. 1 and FIG. 2, the system includes at least one of a radio access network (radio access network, RAN) 102, a user plane function (user plane function, UPF) network element 103, a data network (data network, DN) 104, a core access and mobility management function (core access and mobility management function, AMF) 105, a session management function (session management function, SMF) 106, a policy control function (policy control function, PCF) 107, a unified data management (unified data management, UDM) 108, a location management function (LMF) 109, or an authentication service function (authentication server function, AUSF) 110.

The RAN 102 may be a device communicating with UE 101 in FIG. 1, or a device communicating with a PEGC or a PEMC in FIG. 2. The RAN 102 may also be referred to as an access network device or a radio access network device, and may be a transmission reception point (transmission reception point, TRP), an evolved NodeB (evolved NodeB, eNB, or eNodeB) in an LTE system, a home base station (for example, home evolved NodeB or home NodeB, HNB), a baseband unit (baseband unit, BBU), or a radio controller in a cloud radio access network (cloud radio access network, CRAN) scenario. Alternatively, the RAN 102 may be a relay station, an access point, a vehicle-mounted device, a wearable device, a network device in a 5G network, a network device in a future evolved PLMN network, or the like; may be an access point (access point, AP) in a WLAN; or may be a gNB in an NR system. The RAN 102 may alternatively be a city base station, a micro base station, a pico base station, a femto base station, or the like. This is not limited in this application.

The UPF 103 is mainly used for user-plane service processing, for example, service routing, forwarding, charging, quality of service (quality of service, QoS) mapping and execution, identification of an uplink identifier and routing the identifier to the data network, downlink packet buffering, triggering a notification of downlink data arrival, and a connection to an external data network. The UPF 103 may also be referred to as a user plane network element or a user plane device in 5G, and may be a name in future communication. This is not limited in this application.

The DN 104 provides a data transmission service for the UE 101, and may be a public data network (public data network, PDN) network, for example, the internet (internet). That is, data of a service requested by the UE 101 is from the DN 104.

The AMF 105 is mainly configured to perform mobility management, access management, and the like, and may be configured to implement a function other than session management in functions of a mobility management entity (mobility management entity, MME), for example, functions such as lawful interception or access authorization (or authentication), registration of the UE 101, mobility management, a tracking area update procedure, reachability detection, selection of a session management network element, and mobility state conversion management. The AMF 105 may also be referred to as an access and mobility management function, an access and mobility management device, an access and mobility management network element, an access management device, a mobility management device, or the like. In the future communication system, the AMF 105 may also have another name. A name of a network element having a mobility function of managing the UE 101 in embodiments of this application is not limited.

The SMF 106 is responsible for UPF selection or reselection, is also responsible for management of a session-related service, for example, IP address allocation such as session establishment and release, and is responsible for session establishment, modification, and release, and quality of service (quality of service, QoS) control. The SMF 106 may also be referred to as a session management function, a session management device, a session management function device, a session management function network element, a session management network element, or the like. In the future communication system, the SMF 106 may also have another name. A name of a network element having the session management function is not limited in embodiments of this application.

The PCF 107 is configured to implement a policy control function, a charging policy control function, quality of service (quality of service, QoS) control, and the like. In a process in which the PCF 107 performs QoS control, the PCF 107 may generate a QoS rule. The PCF 107 may also be referred to as a policy control function, a policy control device, a policy control function device, a policy control function network element, a policy control network element, or the like. In the future communication system, the PCF 107 may also have another name. A name of a network element having the policy control function is not limited in embodiments of this application.

The UDM 108 is responsible for managing subscription information of the UE 101. The UDM 108 may also be referred to as a data management function, a data management device, a data management function device, a data management function network element, a data management network element, a unified data management function, a unified data management device, a unified data management function device, a unified data management function network element, a unified data management network element, or the like. In the future communication system, the UDM 108 may also have another name. A name of a network element having the data management function is not limited in embodiments of this application.

The LMF 109 is configured to locate the UE 101.

The AUSF 110 is configured to authenticate the UE.

User equipment (user equipment, UE) 101, namely, UE 101, may be further included in FIG. 1, and is also referred to as a terminal device, a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The UE 101 may be a device that provides voice/data connectivity for a user, for example, a handheld device having a wireless connection function or a vehicle-mounted device. Currently, some examples of the terminal device include: a mobile phone (mobile phone), a tablet computer, a laptop computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in the 5G network, or a terminal device in the further evolved public land mobile network (public land mobile network, PLMN). This is not limited in this application. Alternatively, the UE 101 may be a communication chip in these terminal devices.

Different from these in FIG. 1, a personal internet of things network element (personal IoT network element, PINE), a PIN element with management capability (PIN element with management capability, PEMC), and a PIN element with gateway capability (PIN element with gateway capability, PEGC) may be further included in FIG. 2. The PINE, the PEGC, and the PEMC in FIG. 2 form a personal internet of things network (personal IoT network, PIN). The PIN is an abbreviation of the personal internet of things network (personal IoT network, PIN), and IoT is an abbreviation of the internet of things (internet of things).

The PEMC in FIG. 2 is responsible for managing addition, removal, and resource allocation of the PINE, and the PEMC may allocate numbers to the PINE and/or the PEGC, where the number allocated to the PINE identifies the PINE in the PIN, and the number of the PEGC identifies the PEGC in the PIN. For example, the PEMC in FIG. 2 may be the UE 101 in FIG. 1.

The PEGC in FIG. 2 has a gateway function, and is a transit node between the PIN and a network. The PEGC is responsible for transferring a message from the network (for example, a core network device) to the PEMC or the PINE, for example, receiving a message from a network element via the RAN 102. For example, the PEGC may send a session establishment request message via the RAN, where the session establishment request message includes a PIN ID. In addition, the PEGC may transfer a message from the PINE or the PEMC to the network (for example, the core network device). For example, the PEGC may transfer the message from the PINE or the PEMC to the network via the RAN. For example, the UE 101 in FIG. 1 may be the PEGC in FIG. 2.

Mutual communication may be performed between PINEs in FIG. 2, or the PINE may communicate with the PEGC, or may communicate with the PEMC. The communication between the PINE and another device may be device-to-device (device-to-device, D2D) communication, for example, PC5 connection communication, Bluetooth communication or wireless fidelity (wireless fidelity, Wi-Fi) communication, or certainly may be 3GPP-based communication. The PINE may alternatively be the UE 101 in FIG. 1, and the UE 101 may be a 3GPP terminal device or a non-3GPP terminal device. The PINE network element may be an end device that has a 5G core network (5G core, 5GC) access capability, or may be an end device that does not have the 5GC access capability, and is briefly referred to as an end device below. The end device may belong to a third-party service provider, for example, a smart wearable device or a smart home device.

In FIG. 2, an interface between the PEGC and the AMF 105 is an N1 interface, an interface between the PEMC and the AMF 105 is also an N1 interface, an interface between the PEMC and the RAN 102 is a Uu interface, and an interface between the PEGC and the RAN 102 is a Uu interface.

In embodiments of this application, a PIN-related service may be provided in FIG. 2. Optionally, the PIN-related service may be a service, after the PEGC accesses a 5GC, obtained from an application server by the PEGC by using a protocol data unit (protocol data unit, PDU) session that is established by the PEGC via a user plane device. After obtaining data of the service, the PEGC may allocate the data of the service to at least one of the PINE, the PEGC, or the PEMC shown in FIG. 2. The user plane device may be the UPF 103 shown in FIG. 2.

In a specific implementation, the PIN may include a smartphone and a smart wearable device. The smartphone may be a PEGC and a PEMC. The smart wearable device may be used as a PINE. The mobile phone may establish a PDU session with the application server via the UPF. The mobile phone may send health monitoring information of the smart wearable device to the application server by using the established PDU session. The application server may send, to the mobile phone by using the established PDU session, an analysis result corresponding to the health monitoring information, where a service in which the corresponding analysis result is provided based on the health monitoring information may be considered as a PIN-related service. For another example, the PIN may include a smartphone and a smart home device. The smartphone is used as a PEGC and a PEMC, and the smart home device may be used as a PINE. The mobile phone may establish a PDU session with the application server via the UPF. The mobile phone may indicate, by using the established PDU session, the smart home device to turn on when a first condition is met, or indicate the smart home device to turn off when a second condition is met. A service that provides a switch may be considered as a PIN-related service.

It needs to be noted that the PEMC in FIG. 2 not only has a PIN management function, but also may be used as a PINE, and has a function of the PINE. Similarly, the PEGC not only has a PIN gateway function, but also may be used as a PINE, and has a function of the PINE.

In some embodiments, the PEMC and the PEGC are user equipment having the 5GC access capability, and may access the 5GC by using a 3GPP access technology or a non-3GPP access technology. A connection is established between the PEGC and the PEMC through a PC5 interface. The PEMC is a management node in the PIN network, has the 5GC access capability, and may independently access the 5GC. The PEGC is a gateway node in the PIN network. The PEGC also has the 5GC access capability, and therefore, may also independently access and register with the 5GC.

It needs to be noted that names of the network elements (such as the RAN 102, the UPF 103, the DN 104, the AMF 105, the SMF 106, the PCF 107, the UDM 108, the LMF 109, and the AUSF 110) included in FIG. 1 and FIG. 2 are merely names, and the names do not constitute a limitation on functions of the network elements. In the 5G network and another future network, the network elements may alternatively have other names. This is not specifically limited in embodiments of this application. For example, in a 6G network, some or all of the network elements may still use terms in 5G, or may have other names. A general description is provided herein. Details are not described again below.

It needs to be noted that the network elements in FIG. 1 and FIG. 2 do not necessarily exist at the same time, and which network elements are needed may be determined based on a requirement. A connection relationship between the network elements in FIG. 1 is not uniquely determined, and may be adjusted based on a requirement.

It also needs to be noted that, in FIG. 1, a network element other than the UE 101 may be referred to as a network device. In other words, the network device may include one or more network elements other than the UE 101 in FIG. 1. In FIG. 2, a network element other than the PEGC, the PEMC, and the PINE is referred to as a network device. In other words, the network device may include one or more network elements other than the devices in the PIN in FIG. 2. The network device may include an access network device and a core network device. The RAN 102 in FIG. 1 and FIG. 2 may be referred to as an access network device. In FIG. 1 and FIG. 2, a network element other than the RAN 102, the UE 101, and the DN 104 is referred to as a core network device.

In the following embodiments, for ease of description, numbers of the network elements are omitted. For example, "UE" represents the "UE 101", and an "AMF" represents the "AMF 105".

A terminal device can obtain a service under a specific condition. After the terminal device obtains the service, if the terminal device does not need the service, but the core network device still provides the service for the terminal device, a resource waste is caused. Therefore, how the network device stops the service for the terminal device is an urgent problem to be resolved.

For example, the terminal device may be the UE 101 in FIG. 1 or the PEGC in FIG. 2.

In embodiments of this application, a first core network device may determine, based on whether a first parameter of the terminal device meets a first condition indicated by first condition information of a first service, whether to stop the terminal device from obtaining the first service. If the first parameter does not meet the first condition indicated by the first condition information of the first service, the first core network device sends first information, where the first information is used to stop the terminal device from obtaining the first service.

The following describes terms used in embodiments of this application.

### Standalone non-public network (standalone non-public network, SNPN)

The SNPN does not rely on a public land mobile network (public land mobile network, PLMN). An operator can operate the SNPN. That is, a core network device in the SNPN is independent of the PLMN, and the core network device in the SNPN is operated by the operator independently. When the terminal device needs to access the SNPN, the terminal device may enter an SNPN access mode (access mode).

### Public network integrated-non-public network (public network integrated-non-public network, PNI-NPN)

The PNI-NPN relies on an operator of the PLMN. The PNI-NPN is similar to the PLMN, and is different from the PLMN in that a special slice provided by the PLMN provides an NPN service in the PNI-NPN, and/or a special data network provided by the PLMN provides the NPN service in the PNI-NPN. That is, not all terminal devices can obtain the NPN service. If the special slice provided by the PLMN provides the NPN service in the PNI-NPN, only a terminal device that passes slice authentication can obtain the NPN service. If the special data network provided by the PLMN provides the NPN service in the PNI-NPN, only a terminal device that passes authentication in a process of establishing a session in the special data network can obtain the NPN service. That is, the PNI-NPN performs service separation on a public network service and a private network service by using the slice, to provide an NPN service for the private network service. The NPN service may include an NPN service, or include a localized service. For example, the NPN service is a first service, or the localized service is a first service.

Either the SNPN or the PNI-NPN may be referred to as a non-public network (non-public network, NPN), and a hosting network may include the NPN network. A network opposite to the NPN network may be referred to as a public network. For example, the public network is the PLMN network.

### Localized service (localized service)

A service that can be obtained by the terminal device at a specific geographical location and/or at specific time is referred to as the localized service. The terminal device can obtain the localized service via the NPN or the PLMN. That is, the NPN or the PLMN may be covered at the specific geographical location and/or the specific time. Beyond the specific geographical location or the specific time, the NPN or the PLMN does not exist. Therefore, the terminal device cannot obtain the localized service. The localized service may be provided by an NPN or a PLMN operator network, or may be provided by a third-party operator. Optionally, the first service may be a localized service. Optionally, the first service may be a PIN-related service. Optionally, the localized service may be a PIN-related service. For example, a service obtained by the terminal device via the PLMN may be the PIN-related service.

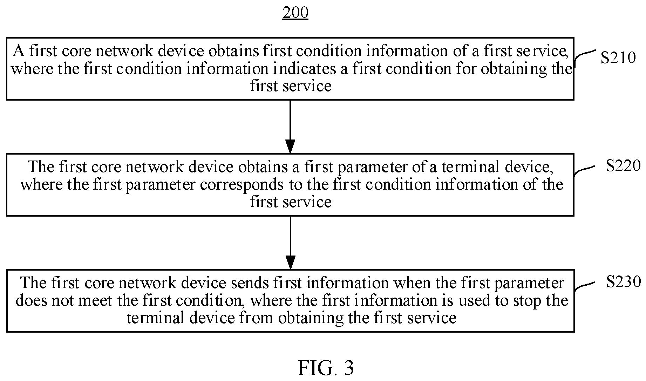

The following describes, with reference to FIG. 3, a communication method 200 provided in an embodiment of this application. As shown in FIG. 3, the method 200 includes the following steps.

S210: A first core network device obtains first condition information of a first service, where the first condition information indicates a first condition for obtaining the first service.

Optionally, the first condition information of the first service includes at least one of the following: time information, location information, element quantity information, or activation information.

Content included in the first condition information is discussed below in five cases.

Case 1: The first condition information includes the location information. Optionally, the location information is tracking area information, and the tracking area information indicates a tracking area range in which the first service is available. That is, the first condition includes the tracking area range in which the first service is available. Optionally, the location information is coordinate information, and the coordinate information indicates a coordinate range in which the first service is available. That is, the first condition includes the coordinate range in which the first service is available. Optionally, the location information is cell identifier information, and the cell identifier information indicates a cell range in which the first service is available. That is, the first condition includes the cell range in which the first service is available.

Case 2: The first condition information includes the time information. Optionally, the time information is time period information, and the time period information indicates a time period range in which the first service is available. That is, the first condition includes the time period range in which the first service is available. For example, a time period is represented by start time and end time. Optionally, the time information is use duration information, and the use duration information indicates duration for which the first service is available. That is, the first condition includes the duration for which the first service is available.

Case 3: The first condition information includes the location information and the time information. Optionally, when the location information is tracking area information, and the time information is time period information, the first condition includes a tracking area range in which the first service is available and a time period range in which the first service is available. Optionally, when the location information is tracking area information, and the time information is use duration information, the first condition includes a tracking area range in which the first service is available and duration for which the first service is available. Optionally, when the location information is coordinate information, and the time information is time period information, the first condition includes a coordinate range in which the first service is available and a time period range in which the first service is available. Optionally, when the location information is coordinate information, and the time information is use duration information, the first condition includes a coordinate range in which the first service is available and duration for which the first service is available. Optionally, when the location information is cell identifier information, and the time information is time period information, the first condition includes a cell range in which the first service is available and a time period range in which the first service is available. Optionally, when the location information is cell identifier information, and the time information is use duration information, the first condition includes a cell range in which the first service is available and duration for which the first service is available.

Case 4: The first condition information includes the activation information. The activation information indicates that the first service is in an active state, that is, a terminal device can obtain the first service only in the active state. That is, the first condition is that the first service is active. Optionally, in the scenario shown in FIG. 2, the first service may be a PIN-related service, and the activation information may indicate that the PIN-related service is in the active state.

Case 5: The first condition information includes the element quantity information. The element quantity information indicates a range of quantities of elements that can be supported by the first service. For example, a maximum quantity of elements and/or a minimum quantity of elements may indicate the range of quantities. Optionally, in the scenario shown in FIG. 2, the first service may be a PIN-related service, and the element quantity information may be element quantity information of PINEs. For example, the element quantity information of the PINEs may be a range of quantities of PINEs that can be supported by the first service, for example, a maximum quantity of PINEs that can be supported by the first service and/or a minimum quantity of PINEs that can be supported by the first service.

For different first core network devices, in S210, the first core network device obtains the first condition information of the first service in different manners. The following discusses two cases.

Case 1: The first core network device may be a session management device.

Optionally, in Case 1, S210 includes: The first core network device receives the first condition information of the first service from a mobility management device.

Optionally, in Case 1, S210 includes: The first core network device sends a fourth message to a unified data management device, where the fourth message is used to subscribe to condition information from the unified data management device. The first core network device receives the condition information of each of at least one service from the unified data management device, where each service corresponds to one piece of condition information. The first core network device determines the first condition information of the first service from the condition information of each of the at least one service. Optionally, the unified data management device may be a unified data management function, may be a unified data management network element, or may be a unified data management function network element, a UDM, or the like. The unified data management device is not limited in embodiments of this application.

Optionally, that the first core network device determines the condition information of the first service from the condition information of each of the at least one service includes: The first core network device determines the first condition information of the first service from the condition information of each service based on a service identifier of the first service.

Optionally, the first core network device may receive the service identifier of the first service from the mobility management device. For example, the first core network device receives a session request message from the mobility management device, and obtains the service identifier of the first service from the session request message. The session request message is used to generate a session for the first service, and the session request message is a session establishment request message or a session modification request message.

Optionally, the first core network device may determine the service identifier of the first service based on a data network name of the first service and/or slice information of the first service in the session request message. That is, if the data network name of the first service and the slice information of the first service in the session request message can uniquely correspond to the first service, the session request message may not include the service identifier of the first service, but may include the data network name of the first service and the slice information of the first service. In this way, the first core network device may determine the service identifier of the first service based on the data network name of the first service and the slice information of the first service, and then determine the first condition information of the first service from the condition information of each service based on the service identifier of the first service.

Optionally, in Case 1, S210 includes: The first core network device receives the session request message from the mobility management device, and obtains the first condition information of the first service from the session request message. That is, the session request message received by the mobility management device from the terminal device may include the first condition information of the first service, the mobility management device may send the session request message to the first core network device, and the first core network device may obtain the first condition information of the first service from the session request message.

Case 2: The first core network device may be a mobility management device.

Optionally, in Case 2, S210 includes: The first core network device sends a fourth message to a unified data management device, where the fourth message is used to subscribe to condition information from the unified data management device. The first core network device receives the condition information of each of at least one service from the unified data management device, where each service corresponds to one piece of condition information. The first core network device determines the first condition information of the first service from the condition information of each of the at least one service.

Optionally, that the first core network device determines the condition information of the first service from the condition information of each of the at least one service includes: The first core network device determines the first condition information of the first service from the condition information of each service based on a service identifier of the first service.

Optionally, the first core network device may receive the service identifier of the first service from the terminal device. For example, the first core network device receives a session request message from the terminal device, and obtains the service identifier of the first service from the session request message. The session request message is used to generate a session for the first service, and the session request message is a session establishment request message or a session modification request message.

Optionally, the method 200 further includes: The first core network device receives a fifth message from the terminal device, where the fifth message is used to register with a core network that provides a first service, and the fifth message includes a service identifier of the first service; and sends a sixth message to the unified data management device, where the sixth message is for requesting first condition information of the first service identified by the service identifier of the first service. For example, the sixth message is a condition request message, and the sixth message includes the service identifier of the first service. That is, when receiving messages that are used for registration and that are sent by a plurality of terminal devices, the first core network device may request, from the unified data management device based on service identifiers in the registration messages, condition information of services identified by the service identifiers. In this way, the first core network device may request the condition information of the plurality of services. In Case 2, S210 includes: When receiving a session request message of a terminal device (the terminal device in the method 200), the first core network device may determine first condition information of a first service from the condition information of the plurality of services based on a service identifier of the first service in a session request.

Optionally, the unified data management device in embodiments of this application may be a unified data management function, may be a unified data management network element, or may be a unified data management function network element, a UDM, or the like. The unified data management device is not limited in embodiments of this application.

Optionally, the mobility management device in embodiments of this application may be an access and mobility management device, may be the access and mobility management device, may be an access and mobility management network element, may be the access and mobility management device, or may be an AMF or the like.

Optionally, the session management device in embodiments of this application may be a session management network element, may be a session management function device, may be a session management function network element, or may be an SMF.

S220: The first core network device obtains a first parameter of the terminal device, where the first parameter corresponds to the first condition information of the first service.

Optionally, that the first parameter corresponds to the first condition information of the first service may be understood as follows: The first parameter is a parameter of the terminal device in the first condition information, and different first condition information indicates different first parameters. That is, after obtaining the first condition information of the first service, the first core network device needs to obtain the parameter of the terminal device in the first condition information.

The following discusses five cases in which the first core network device obtains the first parameter of the terminal device.

Case 1: Corresponding to Case 1 of the first condition information in S210, when the first condition information includes the location information, the first parameter includes a location-related parameter.

Optionally, when the first condition information includes the location information, and the location information is the tracking area information, the first parameter includes a tracking area of the terminal device. That the first core network device obtains a first parameter of the terminal device in S220 includes: The first core network device obtains the tracking area of the terminal device.

If the first core network device is the session management device, that the first core network device obtains the tracking area of the terminal device includes: The first core network device sends a third message to a mobility management device corresponding to the terminal device, where the third message is for requesting the tracking area of the terminal device; and obtains the tracking area of the terminal device from the mobility management device. That is, the third message may also be referred to as a message for subscribing to the tracking area of the terminal device. In this way, the mobility management device corresponding to the terminal device may send the tracking area of the terminal device to the session management device based on the subscription of the first core network device.

If the first core network device is the mobility management device corresponding to the terminal device, the mobility management device may determine the tracking area of the terminal device in the method 200 based on tracking areas that are of terminal devices and that are stored in the mobility management device. For example, the mobility management device stores the tracking areas that are of the plurality of terminal devices and that are managed by the mobility management device, and the mobility management device may determine the tracking area of the terminal device based on an identifier of the terminal device in the method 200.

Optionally, when the first condition information includes the location information, and the location information is the coordinate information, the first parameter includes coordinates of the terminal device. That the first core network device obtains a first parameter of the terminal device in S220 includes: The first core network device obtains the coordinates of the terminal device.

Optionally, that the first core network device obtains the coordinates of the terminal device includes: The first core network device sends a first message to a location function device corresponding to the terminal device, where the first message is for requesting the coordinates of the terminal device; and obtains the coordinates of the terminal device from the location management device. That is, after receiving the first message, the location management device locates the terminal device, and determines the coordinates of the terminal device. That is, the first message may also be referred to as a message for subscribing to the coordinates of the terminal device. In this way, the location management device may send the coordinates of the terminal device to the first core network device based on the subscription of the first core network device. Optionally, the first core network device may be the session management device or the mobility management device.

In embodiments of this application, the location management device may be a location management network element, a location management function, a location management function device, a location management function network element, or a location management function (location management function, LMF).

Optionally, when the first condition information includes the location information, and the location information is the cell identifier information, the first parameter includes a cell in which the terminal device is located. That the first core network device obtains a first parameter of the terminal device in S220 includes: The first core network device obtains the cell in which the terminal device is located.

Optionally, that the first core network device obtains the cell in which the terminal device is located includes: The first core network device sends a second message to an access network device corresponding to the terminal device, where the second message is for requesting the cell in which the terminal device is located; and obtains, from the access network device, the cell in which the terminal device is located. That is, the second message may also be referred to as a message for subscribing to the cell in which the terminal device is located. In this way, the access network device may send, to the first core network device based on the subscription of the first core network device, the cell in which the terminal device is located. If the first core network device is the mobility management device, that the first core network device sends a second message to an access network device corresponding to the terminal device includes: The first core network device directly sends the second message to the access network device corresponding to the terminal device. If the first core network device is the session management device, that the first core network device sends a second message to an access network device corresponding to the terminal device includes: The first core network device sends, via the mobility management device, the second message to the access network device corresponding to the terminal device.

Optionally, the access network device corresponding to the terminal device may be understood as an access network device currently serving the terminal device, or may be understood as an access network device currently connected to the terminal device.

Case 1: Corresponding to Case 2 of the first condition information in S210, when the first condition information includes the time information, the first parameter includes a time-related parameter.

Optionally, when the first condition information includes the time information, and the time information is the time period information, the first parameter includes current time at which the first core network device serves the terminal device with the first service. That the first core network device obtains a first parameter of the terminal device in S220 includes: The first core network device obtains the current time at which the first core network device serves the terminal device with the first service. For example, the current time is 2:00.

Optionally, when the first condition information includes the time information, and the time information is the use duration information, the first parameter includes duration for which the terminal device uses the first service. That the first core network device obtains a first parameter of the terminal device in S220 includes: The first core network device obtains the duration for which the terminal device uses the first service. For example, the duration is 30 minutes.

Optionally, that the first core network device determines the duration for which the terminal device obtains the first service includes: The first core network device starts a first timer, where the first timer is used to obtain the duration for which the terminal device uses the first service. Optionally, the first timer may be a timer corresponding to the first service. That is, different services may correspond to different timers.

Optionally, in Case 2, the first core network device may be the mobility management device, or the first core network device may be the session management device.

Case 3: Corresponding to Case 3 of the first condition information in S210, when the first condition information includes the time information and the location information, the first parameter includes a time-related parameter and a location-related parameter. Optionally, when the first condition information includes the tracking area information and the time period information, the first parameter includes a tracking area of the terminal device and current time at which the first core network device serves the terminal device with the first service. Optionally, when the first condition information includes the tracking area information and the duration information, the first parameter includes a tracking area of the terminal device and duration for which the terminal device uses the first service. Optionally, when the first condition information includes the coordinate information and the time period information, the first parameter includes coordinates of the terminal device and current time at which the first core network device serves the terminal device with the first service. Optionally, when the first condition information includes the coordinate information and the duration information, the first parameter includes coordinates of the terminal device and duration for which the terminal device uses the first service. Optionally, when the first condition information includes the cell information and the time period information, the first parameter includes a cell in which the terminal device is located and current time at which the first core network device serves the terminal device with the first service. Optionally, when the first condition information includes the cell information and the duration information, the first parameter includes a cell in which the terminal device is located and duration for which the terminal device uses the first service.

For a manner of obtaining the location information by the first core network device in Case 3, refer to descriptions in Case 1, and for a manner of obtaining the time information by the first core network device, refer to descriptions in Case 2.

Case 4: Corresponding to Case 4 of the first condition information in S210, when the first condition information includes the activation information, that the first core network device obtains a first parameter of the terminal device in S220 includes: The first core network device obtains a service identifier of the first service. The first core network device determines, based on the service identifier of the first service, whether the first service is activated. In this case, the first parameter of the terminal device indicates whether the first service is activated. Optionally, the first core network device may interact with a UDM, to obtain, from the UDM, whether the first service is activated. For example, the first core network device may send the service identifier of the first service to the UDM. The UDM may store a correspondence between services and whether the services are activated. The UDM returns a first parameter to the first core network device. The first parameter indicates whether the first service is activated. For example, the first parameter indicates that the first service is activated, or the first service is not activated.

Case 5: Corresponding to Case 5 of the first condition information in S210, when the first condition information includes the element quantity information, the first parameter includes a quantity of elements currently supported by the first service. Optionally, the terminal device may send, to the first core network device, the quantity of the elements currently supported by the first service. For example, the terminal device may include, in a session establishment request message, the quantity of the elements currently supported by the first service. For example, in FIG. 2, when the first service is the PIN-related service, and the terminal device is a PEGC, a quantity of PINEs connected to the PEGC is a quantity of PINE elements currently supported by the first service.

S230: The first core network device sends first information when the first parameter does not meet the first condition, where the first information is used to stop the terminal device from obtaining the first service.

Optionally, S230 is discussed below in five cases.

Case 1: Corresponding to Case 1 in S210, the first condition information includes the location information.

Optionally, when the first condition includes the tracking area range in which the first service is available, the first parameter includes a tracking area of the terminal device. S230 includes: If the tracking area of the terminal device is not within the tracking area range in which the first service is available, the first core network device sends the first information. If the tracking area of the terminal device is within the tracking area range in which the first service is available, the first core network device does not send the first information.

Optionally, when the first condition includes the coordinate range in which the first service is available, the first parameter includes coordinates of the terminal device. S230 includes: If the coordinates of the terminal device are not within the coordinate range in which the first service is available, the first core network device sends the first information. If the coordinates of the terminal device are within the coordinate range for which the first service is available, the first core network device does not send the first information.

Optionally, when the first condition includes the cell range in which the first service is available, the first parameter includes a cell in which the terminal device is located. S230 includes: If the cell in which the terminal device is located is not within the cell range in which the first service is available, the first core network device sends the first information. If the cell in which the terminal device is located is within the cell range in which the first service is available, the first core network device does not send the first information.

Case 2: Corresponding to Case 2 in S220, the first condition information includes the time information.

Optionally, when the first condition includes the time period range in which the first service is available, the first parameter includes current time at which the first core network device serves the terminal device with the first service. S230 includes: If the current time at which the first core network device serves the terminal device with the first service is within the time period range in which the first service is available, the first core network device sends the first information. If the current time at which the first core network device serves the terminal device with the first service is not within the time period range in which the first service is available, the first core network device does not send the first information. For example, the time period range in which the first service is available is 3:00 to 5:00. If the current time at which the first core network device serves the terminal device with the first service is 2:00, the first core network device sends the first information. If the current time at which the first core network device serves the first service is 4:00, the first core network device does not send the first information.

Optionally, if the first condition information of the first service corresponding to a plurality of terminal devices is all time period information, the first condition includes the time period range in which the first service is available. If current time obtained by the first core network device is not after the time period range, the first core network device may send the first information, where the first information is used to stop the first service for the plurality of terminal devices.

Optionally, when the first condition includes the duration for which the first service is available, the first parameter includes duration for which the terminal device uses the first service. S230 includes: If the duration for which the terminal device uses the first service is greater than the duration for which the first service is available, the first core network device sends the first information. If the duration for which the first core network device uses the first service is less than or equal to the duration for which the first service is available, the duration for which the terminal device uses the first service is determined by continuing to monitor the first timer. For example, the duration for which the first service is available is two hours. If the duration for which the terminal device uses the first service is 30 minutes, the first core network device sends the first information. If the duration for which the terminal device uses the first service is three hours, the first core network device does not send the first information.

Case 3: Corresponding to Case 3 in S220, the first condition information includes the location information and the time information.

Optionally, when the first condition includes the tracking area range in which the first service is available and the time period range in which the first service is available, the first parameter includes a tracking area of the terminal device and current time at which the first core network device serves the terminal device with the first service. S230 includes: If the tracking area of the terminal device is not within the tracking area range in which the first service is available, and/or the current time at which the first core network device serves the terminal device with the first service is not within the time period range in which the first service is available, the first core network device sends the first information.

Optionally, the first condition includes a tracking area range in which the first service is available and duration for which the first service is available. The first parameter includes a tracking area of the terminal device and duration for which the terminal device uses the first service. S230 includes: If the tracking area of the terminal device is not within the tracking area range in which the first service is available, and/or the duration for which the terminal device uses the first service is greater than the duration for which the first service is available, the first core network device sends the first information.

Optionally, the first condition includes the coordinate range in which the first service is available and the time period range in which the first service is available. The first parameter includes coordinates of the terminal device and current time at which the first core network device serves the terminal device with the first service. S230 includes: If the coordinates of the terminal device are not within the coordinate range in which the first service is available, and/or the current time at which the first core network device serves the terminal device with the first service is not within the time period range in which the first service is available, the first core network device sends the first information.

Optionally, the first condition includes the coordinate range in which the first service is available and the duration for which the first service is available. The first parameter includes coordinates of the terminal device and duration for which the terminal device uses the first service. S230 includes: If the coordinates of the terminal device are not within the coordinate range in which the first service is available, and/or the duration for which the terminal device uses the first service is greater than the duration for which the first service is available, the first core network device sends the first information.

Optionally, the first condition includes the cell range in which the first service is available and the time period range in which the first service is available. The first parameter includes a cell in which the terminal device is located and current time at which the first core network device serves the terminal device with the first service. S230 includes: If the cell in which the terminal device is located is not within the cell range in which the first service is available, and/or the current time at which the first core network device serves the terminal device with the first service is not within the time period range in which the first service is available, the first core network device sends the first information.

Optionally, the first condition includes the cell range in which the first service is available and the duration for which the first service is available. The first parameter includes a cell in which the terminal device is located and duration for which the terminal device uses the first service. S230 includes: If the cell in which the terminal device is located is not within the cell range in which the first service is available, and/or the duration for which the terminal device uses the first service is greater than the duration for which the first service is available, the first core network device sends the first information.

Case 4: Corresponding to Case 4 in S220, the first condition information includes the activation information, and the activation information indicates that the state of the first service is the active state. S230 includes: If the first parameter indicates that the first service is not activated, the first core network device sends the first information.

Case 5: Corresponding to Case 5 in S220, the first condition information includes the element quantity information, and the first parameter is a quantity of elements currently supported by the first service. S230 includes: If the quantity of the elements currently supported by the first service is not within the range of quantities indicated by the element quantity information, the first core network device sends the first information.

In different scenarios, receiving ends of the first information are different. The following discusses three cases: The first core network device sends the first information.

Case 1: That the first core network device sends the first information includes: The first core network device sends the first information to the terminal device.

Optionally, if the first core network device is the mobility management device, that the first core network device sends the first information to the terminal device includes: The mobility management device sends the first information to the terminal device.

Optionally, if the first core network device is the session management device, that the first core network device sends the first information to the terminal device includes: The session management device sends the first information to the terminal device via the mobility management device.

Optionally, before that the core network device sends the first information, the method further includes: The first core network device receives the session request message sent by the terminal device. If the first parameter does not meet the first condition, the first core network device sends the first information to the terminal device. Optionally, the first core network device sends a session reject message to the terminal device, where the session reject message includes the first information. That is, in a process of establishing a session or modifying a session by the terminal device, if determining that the first parameter does not meet the first condition, the first core network device may reject the establishment of the session or the modification of the session performed by the terminal device. This is equivalent to that the first core network device rejects providing the first service for the terminal device. Optionally, if determining that the first parameter meets the first condition, the first core network device establishes a session, modifies a session, or the like for the first service for the terminal device.

That is, in Case 1 in which the session is established or the session is modified for the first service for the terminal device, if the first parameter of the terminal device does not meet the first condition, the first core network device may reject the establishment of the session or the modification of the session for the terminal device. Therefore, the first core network device needs to send the session reject message to the terminal device, to indicate that the establishment of the session is rejected for the first service for the terminal device.

Case 2: The first core network device is the mobility management device. Optionally, that the first core network device sends the first information includes: The first core network device sends the first information to the session management device, where the first information specifically indicates that the first service for the terminal device does not meet the first condition. In this way, the session management device may determine, based on the first information, to stop sending the first service to the terminal device, and the session management device sends, to the terminal device, an indication indicating that the user management device stops sending the first service to the terminal device. Optionally, that the first core network device sends the first information includes: The first core network device sends the first information to a policy management device, where the first information specifically indicates that the first service for the terminal device does not meet the first condition. In this way, the policy management device may send a session policy to the session management device based on the first information, and the session policy is used by the session management device to determine to stop sending the first service to the terminal device.

Case 3: If the first core network device is the session management device, that the first core network device sends the first information includes: The first core network device sends the first information to a user plane device, where the first information specifically indicates the user plane device to stop sending the first service to the terminal device. In this way, the user plane device may stop, based on the first information, sending the first service to the terminal device.

Optionally, the session management device may further send the service identifier of the first service to the user plane device. The first information specifically indicates the user plane device to stop sending, to the terminal device, the first service identified by the service identifier of the first service. That is, when sending the first information to the user plane device, the session management device may further send the service identifier of the first service. In this way, the user plane device can know which service is stopped, to avoid that the user plane device does not know which service is stopped. That is, the first information corresponds to the service identifier of the first service. In this way, the user plane device may determine, based on the first information, to stop the first service identified by the service identifier of the first service.

Optionally, the session management device may send the first information and the service identifier of the first service in one message, or may send the first information and the service identifier of the first service in different messages. This is not limited in embodiments of this application.

Optionally, if the session request message further includes a service identifier of a second service, the session management device may establish a session for the first service and the second service based on the session request message, that is, services corresponding to the session are the first service and the second service. When the session management device determines that the first parameter of the terminal device does not meet the first condition, a second parameter does not meet a second condition of the second service, where the second parameter is a parameter corresponding to second condition information of the second service, and the second condition information indicates the second condition for obtaining the second service, if the session management device may send second information to the user plane device, where the second information indicates the user plane device to stop sending the second service to the terminal device, the method further includes: The session management device sends third information to the user plane device, where the third information is used to release the session. In other words, if determining to stop the plurality of services for the session, the session management device may send service stop information, or may send session release information. In this way, the user plane device may stop sending the plurality of services to the terminal device, or may release the session.

In addition, if the first parameter meets the first condition and the second parameter does not meet the second condition, the session management device sends the second information to the user plane device, and does not send the first information and the third information. If the first parameter does not meet the first condition and the second parameter meets the second condition, the session management device sends the first information to the user plane device, and does not send the second information and the third information.

Optionally, the session request message may alternatively include one or two or more service identifiers. In this way, a service corresponding to the established session may be one service, for example, the first service, or may be two services, for example, the first service and the second service, or may be more than two services. A quantity of services corresponding to the session is not limited in embodiments of this application.

Optionally, in the method 200, the first core network device and the device communicating with the first core network device may be devices in an NPN network, for example, may be devices in an SNPN network, or may be devices corresponding to slices in a PNI-NPN network. Optionally, in the method 200, the first core network device and the device communicating with the first core network device may be devices in an NPN network, for example, may be devices in a PLMN network, or may be, for example, the devices in FIG. 1 or FIG. 2. That is, embodiments of this application are applicable to a private network or a public network.

In the method 200, the first core network device may determine, based on whether the first parameter of the terminal device meets the first condition indicated by the first condition information of the first service, whether to stop the terminal device from obtaining the first service. If the first parameter does not meet the first condition indicated by the first condition information of the first service, the first core network device sends first information, where the first information is used to stop the terminal device from obtaining the first service. Therefore, a method for stopping the service is provided.

In some embodiments, if the terminal device is within a specified area in which the service provided, the service for the terminal device is not stopped. If the terminal device is not within an area in which the service is provided, the service for the terminal device is stopped. For example, if the terminal device is in an area identified by a tracking area identity (tracking area identity, TAI), the service for the terminal device is not stopped. If the terminal device is not within an area identified by a TAI, the service for the terminal device is stopped. However, if the TAI identifies the area in which the terminal device uses the service, the service for the terminal device cannot be managed in a refined manner. This may cause a loss. For example, a user A of a concert organizer subscribes to, from an operator A, a function that is of high-definition video playback of a concert site and that can be obtained by using a mobile phone at the concert site. That is, only the mobile phone user at the concert site can obtain the function of the high-definition video playback of the concert site. However, the area identified by the TAI may include one or more cells. Therefore, the area identified by the TAI is large, and a mobile phone user in the area identified by the TAI in addition to the concert site cannot be restricted from obtaining the function of the high-definition video playback of the concert site. This damages interests of the operator A. Alternatively, the operator A may allow only the mobile phone user in limited time to obtain the function of the high-definition video playback of the concert site. Therefore, the mobile phone user cannot be restricted from obtaining the function of the high-definition video playback of the concert site in terms of time. This damages interests of the operator A. For example, that the function of the high-definition video playback of the concert site is obtained by using the mobile phone is the first service in embodiments of this application. Therefore, when the first condition information includes the location information, and the location information is the coordinate information or the cell information, the service range of the first service may be determined based on a more precise location, thereby avoiding damaging interests of the operator A. When the first condition information includes the time information, and the time information is the time period information or the use duration information, the service range of the first service may be determined based on more precise time, thereby avoiding damaging interests of the operator A. When the first condition information is the time information and the location information, the service range of the first service may be determined based on dimensions of time and location, thereby avoiding damaging interests of the operator A.

Optionally, the session management device may be referred to as a session management function, a session management function device, a session management function network element, a session management network element, an SMF, or the like.

Optionally, the mobility management device may be referred to as an access and mobility management function, an access and mobility management device, an access and mobility management network element, an access management device, an AMF, or the like.

Optionally, the policy management device may be referred to as a policy control function, a policy control function device, a policy control function network element, a policy control network element, a PCF, or the like.

Optionally, the location management device may be referred to as a location management function, a location management function network element, a location management function device, or an LMF.

Optionally, the unified data management device may be referred to as a data management function, a data management device, a data management function device, a data management function network element, a data management network element, a unified data management function, a unified data management function device, a unified data management function network element, a unified data management network element, a UDM, or the like.

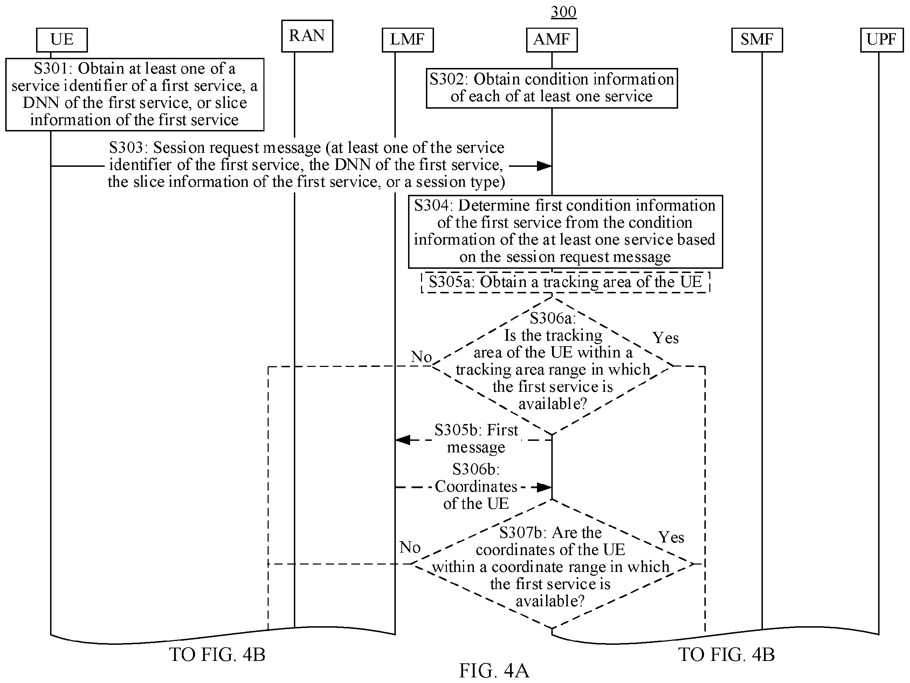

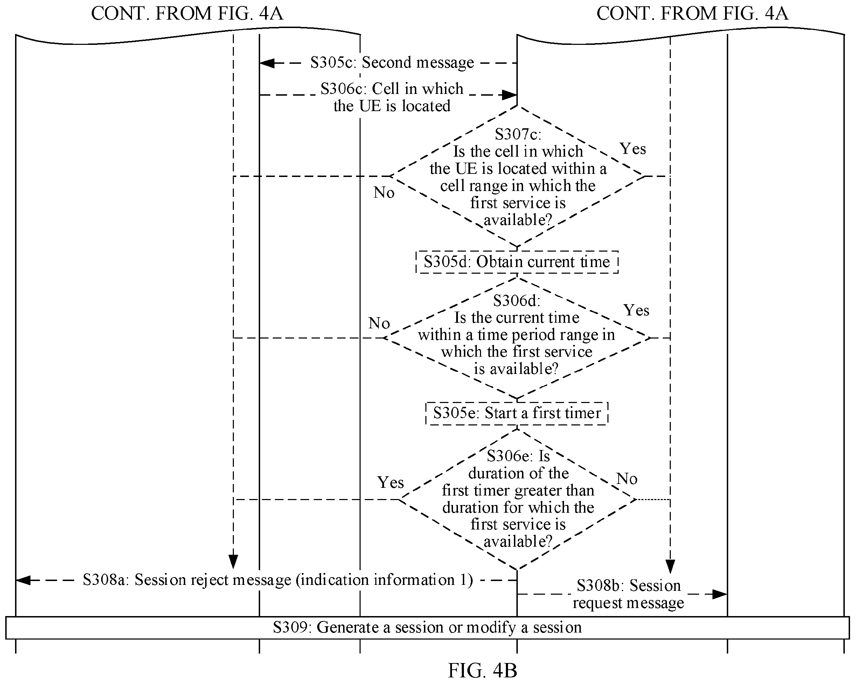

To better describe the method 200, the following provides descriptions with reference to a method 300 shown in FIG. 4A and FIG. 4B. The first core network device may be an AMF in FIG. 4A and FIG. 4B, and the terminal device may be UE. The method 300 includes:
S301: The UE obtains at least one of a service identifier (service ID) of a first service, a data network name (data network name, DNN) of the first service, slice information of the first service, or first condition information of the first service.

Optionally, the slice information of the first service indicates single network slice selection assistance information (single network slice selection assistance information, S-NSSAI) of the first service.

Optionally, the service identifier of the first service may be a PIN ID.

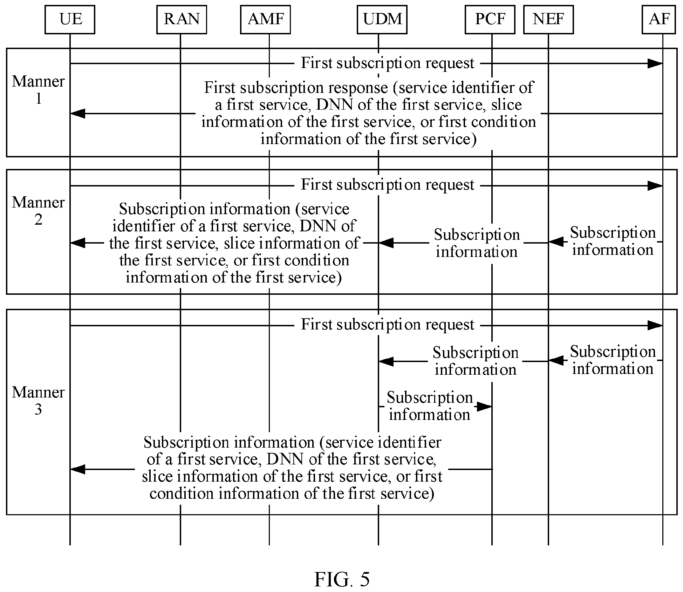

Optionally, the UE may obtain the at least one of the service identifier of the first service, the DNN of the first service, the slice information of the first service, or the first condition information of the first service in S301 from a public network. For example, FIG. 5 shows three manners in which the UE may obtain at least one of the service identifier (service ID) of the first service, the DNN of the first service, the slice information of the first service, a session type, or the first condition information of the first service from the public network.

Manner 1: As shown in FIG. 5, the UE may send a first subscription request to an AF, where the first subscription request is used to subscribe to the first service. The AF determines subscription information of the first service based on the first subscription request. The AF sends a first subscription response of the first subscription request to the UE, where the first subscription response includes the at least one of the service identifier (service ID) of the first service, the DNN of the first service, the slice information of the first service, or the first condition information of the first service.

Optionally, the UE sends the first subscription request to the AF by using an application (application, APP). The APP may provide a plurality of subscription requirements. After a user selects a subscription requirement on the APP of the UE, the first subscription request may include the selected subscription requirement. The AF sends the first subscription response to the UE by using the APP. Alternatively, the UE sends the first subscription request to the AF by using a web page, and the AF sends the first subscription response to the UE by using the web page.

The AF (application function, AF) is an application function device of an operator.

Manner 2: As shown in FIG. 5, the UE may send a first subscription request to an AF, where the first subscription request is used to subscribe to the first service. The AF determines subscription information of the first service based on the first subscription request. The AF sends the subscription information of the first service to a UDM via an NEF. The UDM sends the subscription information of the first service to the UE. The subscription information includes the at least one of the service identifier (service ID) of the first service, the DNN of the first service, the slice information of the first service, or the first condition information of the first service.

Optionally, the UE sends the first subscription request to the AF by using an APP or a web page, where the first subscription request includes a plurality of subscription requirements that may be provided by the APP or the web page. After a user selects a subscription requirement on the APP or the web page of the UE, the first subscription request may include the selected subscription requirement. After receiving the first subscription request, the AF sends subscription data of the UE to a UDM via an NEF, where the subscription data includes the subscription information. The UDM sends the subscription information to the AMF, and the AMF sends the subscription information to the UE. Optionally, that the AMF sends the subscription information to the UE includes: The AMF sends the subscription information to the UE by using a non-access stratum (non-access stratum, NAS) message. Optionally, if receiving the subscription information, the UE sends a NAS message to the AMF, where the NAS message indicates that the UE successfully receives the subscription information. Optionally, the AMF may send a response message to the UDM. If the AMF successfully sends the subscription information, the response message indicates that the subscription information is successfully sent to the UE. If the AMF fails to send the subscription information, the response information indicates that the subscription information fails to be sent to the UE. Optionally, if the AMF receives the NAS message from the UE, where the NAS message indicates that the UE successfully receives the subscription information, the AMF sends a response message to the UDM, where the response message indicates that the subscription information is successfully sent to the UE.

Manner 3: As shown in FIG. 5, the UE may send a first subscription request to an AF, where the first subscription request is used to subscribe to the first service. The AF determines subscription information of the first service based on the first subscription request. The AF sends the subscription information of the first service to a UDM via an NEF. The UDM sends the subscription information of the first service to a PCF. The PCF sends the subscription information to the UE. The subscription information includes the at least one of the service identifier (service ID) of the first service, the DNN of the first service, the slice information of the first service, or the first condition information of the first service.

Optionally, the UE sends the first subscription request to the AF by using an APP or a web page, where the APP or the web page may provide a plurality of subscription requirements. After a user selects a subscription requirement on the APP or the web page of the UE, the first subscription request may include the selected subscription requirement. After receiving the first subscription request, the AF sends subscription data of the UE to a UDM via an NEF, where the subscription data includes the subscription information. The UDM sends the subscription information to the PCF. The PCF generates a UE route selection policy (UE route selection policy, URSP) rule based on a requirement of a localized service. The PCF sends the URSP rule to the AMF. The AMF sends the URSP rule to the UE by using a NAS message, where the URSP rule includes the subscription information. Optionally, the AMF may send a response message to the PCF. If the AMF successfully sends the URSP rule, the response message indicates that the URSP rule is successfully sent to the UE. If the AMF fails to send the URSP rule, the response information indicates that the URSP rule fails to be sent to the UE. Optionally, if the AMF receives a NAS message from the UE, where the NAS message indicates that the UE successfully receives the URSP rule, the AMF sends a response message to the PCF, where the response message indicates that the URSP rule is successfully sent to the UE.

It needs to be noted that the foregoing three manners in which the UE obtains the subscription information of the first service describe a case that the UE obtains the at least one of the service identifier (service ID) of the first service, the DNN of the first service, the slice information of the first service, or the first condition information of the first service. In some embodiments, the UE may not obtain the first condition information of the first service. In some embodiments, the UE may not obtain the slice information of the first service.

It needs to be noted that network elements in FIG. 5 and network elements in FIG. 4A and FIG. 4B are network elements belonging to different networks. The network elements in FIG. 5, for example, a RAN, the AMF, the UDM, the PCF, and the NEF, are network elements in the public network, where for example, the public network is home networking. The network elements in FIG. 4A and FIG. 4B, for example, a RAN, an LMF, the AMF, an SMF, and a UPF, are network elements in a private network. The AF configured to send the subscription information to the UDM in FIG. 5 and an AF that provides subscription data of the UE to the UDM in FIG. 4A and FIG. 4B are a same AF, and the UE in FIG. 5 and the UE in FIG. 4A and FIG. 4B are same UE. That is, the UE may obtain the subscription information of the first service from the public network, and request the first service from the private network. In addition, the same AF provides related information of the first service for the public network and the private network. For example, the related information of the first service is the first condition information of the first service. In this way, it can be ensured that the information about the first service obtained by the UE is consistent with the information about the first service obtained by a network element from the private network.

Optionally, the UE may obtain the at least one of the service identifier of the first service, the DNN of the first service, the slice information of the first service, or the first condition information of the first service in S301 from the private network. The network element in the private network is the network element shown in FIG. 4A and FIG. 4B.

Optionally, S301 includes: The UE sends a fifth message to the RAN in FIG. 4A and FIG. 4B, where the fifth message is used to register with a core network that provides the first service, and the fifth message may also be referred to as a registration message. The UE receives, from the RAN, a response message that is of the fifth message and that is sent by the AMF, where the response message of the fifth message includes the at least one of the service identifier of the first service, the DNN of the first service, the slice information of the first service, or the first condition information of the first service. The RAN in FIG. 4A and FIG. 4B may be a RAN accessed by the UE. Optionally, the fifth message may include the service identifier of the first service. Before sending the fifth message to the RAN, the UE subscribes to the first service from the AF. Therefore, the UE stores the service identifier of the first service.

Optionally, after the RAN receives the fifth message, the RAN selects the AMF, and sends the fifth message to the AMF. The AMF selects an authentication service function (authentication server function, AUSF) and performs a procedure such as authentication. The UE, the AMF, the AUSF, and the UDM complete an authentication procedure through interaction. After the authentication is completed, the AMF obtains, from the UDM, subscription data that is of the UE and that is related to the first service. For example, the subscription data that is of the UE and that is related to the first service includes the at least one of the service identifier of the first service, the DNN of the first service, the slice information of the first service, or the first condition information of the first service. The AMF sends a NAS message to the UE via the RAN, where the NAS message includes the at least one of the service identifier of the first service, the DNN of the first service, the slice information of the first service, or the first condition information of the first service. In addition, the NAS message may also be a response message of the fifth message, is also referred to as a registration accept message, and indicates that the AMF accepts the registration of the UE.

S302: The AMF obtains condition information of each of at least one service.

The following describes two manners in which the AMF obtains condition information of each of at least one service.

Manner 1: The AMF may subscribe to the condition information of each of the at least one service from the UDM, for example, by sending a fourth message. When the AF provides the condition information of the at least one service for the UDM, the UDM may send the condition information of the at least one service to the AMF.

Optionally, the AMF may send, to the UDM, a message for subscribing to a localized service, where the message includes a TAI corresponding to the AMF. The UDM sends, to the AMF, the condition information that is of each of the at least one service and that is included in the TAI. That is, if the AMF manages one or more TAIs, the UDM may send, to the AMF, condition information that is of each of at least one service and that is in the one or more TAIs managed by the AMF. That is, in this case, it is implied that the condition information of each service includes location information. In this way, the UDM may provide the condition information that is of these services and that is in the TAI. Optionally, if the message does not include a TAI corresponding to the AMF, the condition information that is of each of the at least one service and that is sent by the UDM to the AMF may include time information. That is, if the AMF does not provide the TAI, the UDM may provide time-related condition information of each service for the AMF.

Optionally, when providing the first service via a private network, a third-party service provider may update the condition information of each of the at least one service to the UDM in the private network. In this way, the UDM in the private network may store the condition information of each of the at least one service. When the AMF subscribes to the condition information of each of the at least one service from the UDM, the UDM may send the condition information of each of the at least one service to the AMF. The private network may be the foregoing SNPN or PNI-NPN.

Optionally, if condition information of some services changes, or some services are added, the AF may update condition information of the changed services to the UDM. For example, the UE subscribes to the first service from the AF, and the UDM stores the first condition information of the first service. If the UE further subscribes to a second service from the AF, the AF stores second condition information of the second service in the UDM. After receiving the second condition information of the added second service, the UDM sends the second condition information of the second service to the AMF.

Manner 2: The AMF receives a fifth message sent by the UE, where the fifth message includes the service identifier of the first service. The AMF subscribes to the first condition information of the first service from the UDM based on the service identifier of the first service, and the UDM returns the first condition information of the first service to the AMF.

Optionally, the first service may be a PIN-related service. Optionally, the service identifier of the first service may be a PIN ID. The UDM may store a service identifier and activation information of each service. After obtaining the PIN ID of the first service from the fifth message, the UDM determines, based on the PIN ID, activation information corresponding to the first service, and sends the activation information to the AMF. In this way, the AMF may obtain the activation information. In this case, the first condition information may include the activation information.

Optionally, if the AMF receives a registration message that is of another UE and that is managed by the AMF, which is used to register with the core network that provides another service, the AMF may alternatively subscribe to condition information of the another service from the UDM. In addition, if the UE further subscribes to a second service from the AF, the fifth message received by the AMF may include a service identifier of the second service, the AF stores the second condition information of the second service in the UDM, and the UDM sends the second condition information of the second service to the AMF.

That is, a difference between the two manners in which the AMF obtains the condition information of each of the at least one service lies in that in Manner 1, the AMF actively subscribes to the UDM, and the UDM may return, to the AMF, the condition information that is of each of the at least one service and that is stored by the UDM; and in Manner 2, when receiving the registration message from the UE, the AMF may obtain the first condition information of the first service from the UDM based on the service identifier of the first service in the registration message, and by analogy, may obtain the condition information of each of the at least one service.

Optionally, in Manner 1 and Manner 2, the AMF may further obtain other related information of the first service from the UDM, which, for example, may be at least one of the DNN of the first service, the slice information of the first service, the service identifier of the first service, or the like. A manner of obtaining the information is consistent with a manner of obtaining the first condition information of the first service.

It needs to be noted that there is no limitation on a sequence between S301 and S302, and S301 may be performed before, after, or at the same time of S302.

S303: The UE sends a session request message to the AMF. The AMF receives the session request message sent by the UE, where the session request message includes at least one of the service identifier of the first service, the DNN of the first service, the slice information of the first service, or the session type.

Optionally, the session request message may be a session establishment request message, or may be a session modification request message. The session establishment request message is used to establish a session, for example, to modify a protocol data unit (protocol data unit, PDU) session, and the modification request message is used to modify a session, for example, to modify a PDU session.

Optionally, the session request message may alternatively include a service identifier of a second service. That is, in this case, the DNN of the first service may be replaced with a DNN of the first service and the second service, and the slice information of the first service may be replaced with slice information of the first service and the second service. That is, if the session request message is the session establishment request message, the slice information and the DNN in the session establishment request message are for establishing a session for the first service and the second service, where the first service and the second service correspond to a same session, or services corresponding to the session are the first service and the second service. If the session request message is the session modification request message, the slice information and the DNN in the session modification request message are for modifying a session for the first service and the second service, where the first service and the second service correspond to a same session, or services corresponding to the session are the first service and the second service.

Optionally, if the session request message includes the service identifier of the second service, the session request message may alternatively include second condition information of the second service.

It needs to be noted that the session request message may alternatively not include the service identifier of the first service. In this case, the DNN and the slice information correspond to the first service, and do not correspond to the second service. That is, when the DNN and the slice information can uniquely identify the first service, the session request message may not carry the service identifier of the first service. If the DNN and the slice information cannot uniquely identify the first service, the session request message may carry the service identifier of the first service.

Optionally, if the UE does not obtain the first condition information of the first service in S301, the session request message in S303 may not carry the first condition information of the first service. Alternatively, if the UE obtains the first condition information of the first service in S301, the session request message in S303 may carry the first condition information of the first service, or may not carry the first condition information of the first service. That is, if the UE does not obtain the first condition information of the first service, the session request message may not carry the first condition information of the first service. If the UE obtains the first condition information of the first service, the session request message may carry the first condition information of the first service, or may not carry the first condition information of the first service.

Optionally, alternatively, S302 may not exist. If the session request message includes the first condition information of the first service, the AMF may obtain the first condition information of the first service from the session request message in S303. That is, the AMF may obtain the first condition information of the first service from another network element (for example, the UDM), or may obtain the first condition information of the first service from the UE. A manner in which the AMF obtains the first condition information of the first service is not limited in embodiments of this application.

Optionally, the session type in the session request message indicates a type of a session that the UE intends to establish. The session type may be determined by the UE, and the UE does not need to obtain the session type from another network element.

S304: The AMF determines the first condition information of the first service from the condition information of the at least one service based on the session request message.

Optionally, if the session request message includes the service identifier of the first service, the AMF determines the condition information of the first service from the condition information of each of the at least one service based on the service identifier of the first service.

Optionally, if the session request message does not include the service identifier of the first service, the AMF may obtain the DNN of the first service, the slice information of the first service, and the service identifier of the first service from the UDM in S302, and the DNN and the slice information are uniquely bound to the first service, the AMF determines the service identifier of the first service based on the DNN and the slice information in the session request message in S303. That is, the AMF obtains the DNN and the slice information that are of the first service in S302. If the DNN and the slice information in the session request message sent by the UE in S303 are the DNN and the slice information of the first service in S302, the AMF may determine that the UE needs to establish a session for the first service corresponding to the DNN and the slice information in S302. Therefore, the AMF may determine the first condition information of the first service from the condition information of the at least one service.

If the first condition information includes location information, and the location information is tracking area information, the method 300 includes S305a and S306b.

S305a: The AMF obtains a tracking area of the UE.

That is, in this case, a first parameter is the tracking area of the UE.

S306a: If the tracking area of the UE is not within a tracking area range in which the first service is available and indicated by the tracking area information, perform S308a.

Optionally, if the tracking area of the UE is within a tracking area range in which the first service is available and indicated by the tracking area information, S308b is performed.

If the first condition information includes location information, and the location information is coordinate information, the method 300 includes S305b, S306b, and S307b.

S305b: The AMF sends a first message to the LMF, where the first message is for requesting coordinates of the UE.

The LMF is a location device corresponding to the UE, and the LMF may locate the UE based on the first message, to obtain the coordinates of the UE.

S306b: The LMF sends the coordinates of the UE to the AMF. The AMF receives the coordinates of the UE.

Optionally, in S306b, the LMF sends, to the AMF, indication information indicating the coordinates of the UE.

That is, in this case, a first parameter is the coordinates of the UE.

S307b: If the coordinates of the UE are not within a coordinate range in which the first service is available and indicated by the coordinate information, perform S308a.

Optionally, if the coordinates of the UE are within a coordinate range in which the first service is available and indicated by the coordinate information, S308b is performed.

If the first condition information includes location information, and the location information is cell identifier information, the method 300 includes S305c, S306c, and S307c.

S305c: The AMF sends a second message to the RAN. The RAN receives the second message from the AMF, where the second message is for requesting a cell in which the UE is located.

The RAN is a RAN accessed by the UE or a RAN connected to the UE.

S306c: The RAN sends, to the AMF, the cell in which the UE is located. The AMF receives, from the RAN, the cell in which the UE is located.

That is, in this case, a first parameter is the cell in which the UE is located.

Optionally, in S306c, the AMF receives, from the RAN, indication information indicating the cell in which the UE is located.

S307c: If the cell in which the UE is located is not within a cell range in which the first service is available and indicated by the cell identifier information, perform S308a.

Optionally, if the cell in which the UE is located is within a cell range in which the first service is available and indicated by the cell identifier information, S308b is performed.

If the first condition information includes time information, and the time information is time period information, the method 300 includes S305d and S306d.

S305d: The AMF obtains current time.

That is, in this case, a first parameter is the current time at which the AMF serves the UE with the first service.

S306d: If the current time is not within a time period range in which the first service is available and indicated by the time period information, perform S308a.

Optionally, if the current time is within a time period range in which the first service is available and indicated by the time period information, S308b is performed.

If the first condition information includes time information, and the time information is use duration information, the method 300 includes S305e and S306e.

S305e: The AMF starts a first timer to start timing.

Optionally, the first timer is a timer corresponding to the first service.

S306e. If duration of the first timer is greater than duration in which the first service is available and indicated by the use duration information, perform S308a.

That is, in this case, a first parameter is the duration of the first timer, and the duration of the first timer is duration for which the AMF serves the UE with the first service.

Optionally, if duration of the first timer is less than duration in which the first service is available and indicated by the use duration information, S308b is performed.

Optionally, if duration of the first timer is equal to duration in which the first service is available and indicated by the use duration information, S308a or S308b may be performed. This is not limited in embodiments of this application.

If the first condition information includes location information and time information, the location information is tracking area information, and the time information is time period information, S305a and S305d are performed. In addition, if a tracking area of the UE is not within a tracking area range in which the first service is available and indicated by the tracking area information, and/or current time is not within a time period range in which the first service is available and indicated by the time period information, S308a is performed.

If the first condition information includes location information and time information, the location information is tracking area information, and the time information is use duration information, S305a and S305e are performed. In addition, if a tracking area of the UE is not within a tracking area range in which the first service is available and indicated by the tracking area information, and/or if duration of a first timer is greater than duration in which the first service is available and indicated by the use duration information, S308a is performed.

If the first condition information includes location information and time information, the location information is coordinate information, and the time information is time period information, S305b, S306b, and S305d are performed. In addition, if coordinates of the UE are not within a coordinate range in which the first service is available and indicated by the coordinate information, and/or current time is not within a time period range in which the first service is available and indicated by the time period information, S308a is performed.

If the first condition information includes location information and time information, the location information is coordinate information, and the time information is use duration information, S305b, S306b, and S305e are performed. In addition, if coordinates of the UE are not within a coordinate range in which the first service is available and indicated by the coordinate information, and/or if duration of a first timer is greater than duration in which the first service is available and indicated by the use duration information, S308a is performed.

If the first condition information includes location information and time information, the location information is cell identifier information, and the time information is time period information, S305c, S306c, and S305d are performed. In addition, if a cell in which the UE is located is not within a range in which the first service is available and indicated by the cell identifier information, and/or current time is not within a time period range in which the first service is available and indicated by the time period information, S308a is performed.

If the first condition information includes location information and time information, the location information is cell identifier information, and the time information is time period information, S305c, S306c, and S305e are performed. In addition, if a cell in which the UE is located is not within a range in which the first service is available and indicated by the cell identifier information, and/or if duration of a first timer is greater than duration in which the first service is available and indicated by the use duration information, S308a is performed.

If the first condition information includes activation information, and the activation information indicates that a state of the first service is an active state, the AMF sends the service identifier of the first service to the UDM, and the UDM determines the activation information corresponding to the service identifier and whether the first service is activated, and sends the activation information to the AMF and indicates whether the first service is activated. If the first service is not activated, S308a may be performed. If the first service is activated, S308b may be performed. That is, the UDM may not only store the activation information of the first service, but also store whether the first service is activated. This process is not shown in FIG. 4A and FIG. 4B.

If the first condition information includes element quantity information, and the element quantity information indicates a range of quantities of elements that can be supported by the first service, the session request message in S303 may include a quantity of elements currently supported by the first service. If the quantity of elements currently supported by the first service is within the range of quantities, S308b may be performed. If the quantity of elements currently supported by the first service is not within the range of quantities, S308a may be performed. This process is not shown in FIG. 4A and FIG. 4B.

S308a: The AMF sends a session reject message to the UE, where the session reject message includes indication information 1, and the indication information 1 indicates the UE to stop obtaining the first service.

The first information in the method 200 may be the indication information 1. That is, if a first parameter of the UE does not meet a first condition in a process of establishing or modifying a session, the session is not established or modified, and a subsequent step after S308a is also ended.

S308b: The AMF sends a session request message to the SMF. The SMF receives the session request message from the AMF.

The session request message includes at least one of the service identifier of the first service, the DNN of the first service, the slice information of the first service, the session type, or the first condition information of the first service.

Optionally, the session request message in S308b may alternatively not include the first condition information of the first service. Optionally, even if the session request message in S303 includes the first condition information of the first service, the session request message in S308b may alternatively not include the first condition information of the first service.

S309: The SMF generates a session or modifies a session based on the session request message.

For a manner of generating the session or modifying the session based on the session request message in S309, refer to descriptions in a conventional technology. To avoid repetition, no detailed example is provided.

Optionally, if the first condition information includes the location information and the time information, the AMF determines a location and time in FIG. 4A and FIG. 4B. In some embodiments, the AMF determines the location, and the SMF determines the time. For example, the SMF performs S305d and S306d, or performs S305e and S306e. Alternatively, the AMF determines the time, and the SMF determines the location. For example, the SMF performs S305a and S306a, or performs S305b, S306b, and S307b, or performs S305c, S306c, and S307c.

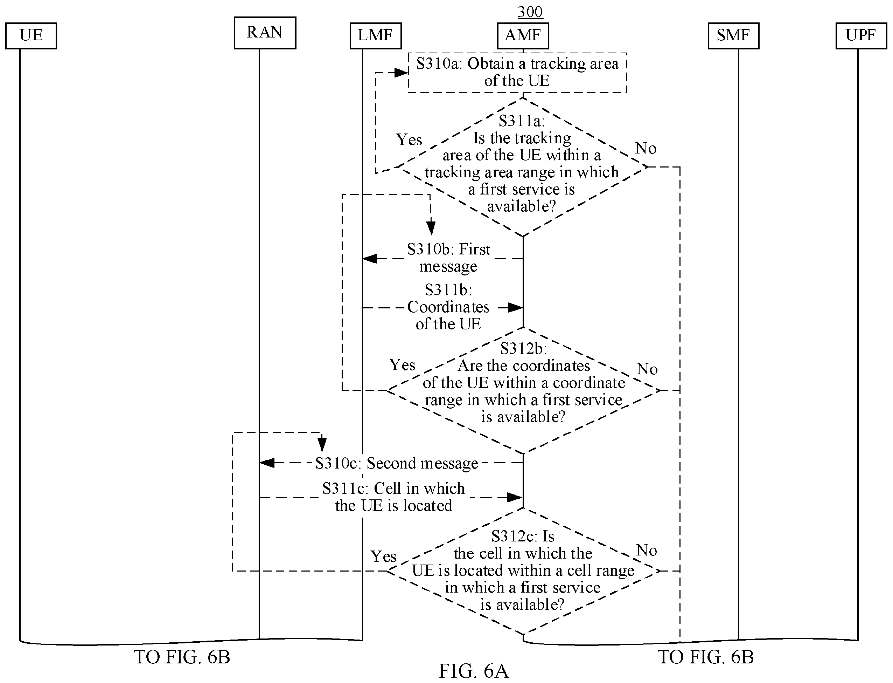

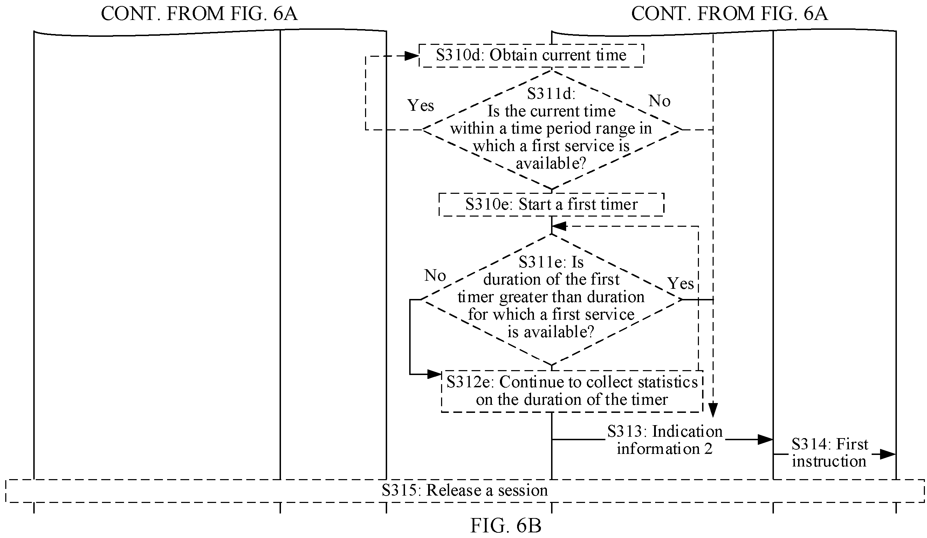

If the first condition information includes location information, and the location information is tracking area information, as shown in FIG. 6A and FIG. 6B, the method 300 further includes S310a and S311a.

S310a: The AMF obtains a tracking area of the UE. That is, in this case, a first parameter is the tracking area of the UE.

S311a: If the tracking area of the UE is not within a tracking area range in which the first service is available and indicated by the tracking area information, perform S313 in FIG. 6A and FIG. 6B.

Optionally, if the tracking area of the UE is within a tracking area range in which the first service is available and indicated by the tracking area information, S310a continues to be performed.

If the first condition information includes location information, and the location information is coordinate information, as shown in FIG. 6A and FIG. 6B, the method 300 further includes S310a, S311b, and S312b.

S310b: The AMF sends a first message to the LMF, where the first message is for requesting coordinates of the UE.

The LMF is a location device corresponding to the UE, and the LMF may locate the UE based on the first message, to obtain the coordinates of the UE.

S311b: The LMF sends, to the AMF, indication information indicating the coordinates of the UE.

That is, in this case, a first parameter is the coordinates of the UE.

S312b: If the coordinates of the UE are not within a coordinate range in which the first service is available and indicated by the coordinate information, continue to perform S313 in FIG. 6A and FIG. 6B.

Optionally, if the coordinates of the UE are within a coordinate range in which the first service is available and indicated by the coordinate information, S310b continues to be performed, for example, S310b may continue to be performed after preset time.

If the first condition information includes location information, and the location information is cell identifier information, as shown in FIG. 6A and FIG. 6B, the method 300 further includes S310c, S310c, and S312c.

S310c: The AMF sends a second message to the RAN. The RAN receives the second message from the AMF, where the second message is for requesting a cell in which the UE is located.

The RAN is a RAN accessed by the UE or a RAN connected to the UE.

S311c. The AMF receives, from the RAN, indication information indicating the cell in which the UE is located.

That is, in this case, a first parameter is the cell in which the UE is located.

S312c: If the cell in which the UE is located is not within a range in which the first service is available and indicated by the cell identifier information, perform S313 in FIG. 6A and FIG. 6B.

Optionally, if the cell in which the UE is located is within the range in which the first service is available and indicated by the cell identifier information, S310c in FIG. 6A and FIG. 6B continues to be performed, for example, S310c may continue to be performed after preset time.

If the first condition information includes time information, and the time information is time period information, as shown in FIG. 6A and FIG. 6B, the method 300 further includes S310d and S311d.

S310d: The AMF obtains current time.

That is, in this case, a first parameter is the current time at which the AMF serves the UE with the first service.

S311d: If the current time is not within a time period range in which the first service is available and indicated by the time period information, perform S313 in FIG. 6A and FIG. 6B.

Optionally, if the current time is within a time period range in which the first service is available and indicated by the time period information, S310d continues to be performed, for example, S310d may continue to be performed after preset time.

If the first condition information includes time information, and the time information is use duration information, as shown in FIG. 6A and FIG. 6B, the method 300 further includes S310e and S311e.

S310e: The AMF starts a first timer to start timing.

Optionally, after S309, the AMF starts a first timer. Optionally, the first timer is a timer corresponding to the first service.

S311e. If duration of the first timer is greater than duration in which the first service is available and indicated by the use duration information, perform S313 in FIG. 6A and FIG. 6B.

That is, in this case, a first parameter is the duration of the first timer, and the duration of the first timer is duration for which the AMF serves the UE with the first service.

Optionally, if the duration of the first timer is less than duration in which the first service is available and indicated by the use duration information, S312e is performed, for example, S310e in FIG. 6A and FIG. 6B may continue to be performed after preset time.

Optionally, if duration of the first timer is equal to duration in which the first service is available and indicated by the use duration information, S312e or S313 is performed.

If the first condition information includes location information and time information, the location information is tracking area information, and the time information is time period information, S310a and S310d are performed. In addition, if a tracking area of the UE is not within a tracking area range in which the first service is available and indicated by the tracking area information, and/or current time is not within a time period range in which the first service is available and indicated by the time period information, S313 in FIG. 6A and FIG. 6B is performed.

If the first condition information includes location information and time information, the location information is tracking area information, and the time information is use duration information, S310a and S310e are performed. In addition, if a tracking area of the UE is not within a tracking area range in which the first service is available and indicated by the tracking area information, and/or if duration of a first timer is greater than duration in which the first service is available and indicated by the use duration information, S313 in FIG. 6A and FIG. 6B is performed.

If the first condition information includes location information and time information, the location information is coordinate information, and the time information is time period information, S310b, S311b, and S310d are performed. In addition, if coordinates of the UE are not within a coordinate range in which the first service is available and indicated by the coordinate information, and/or current time is not within a time period range in which the first service is available and indicated by the time period information, S313 in FIG. 6A and FIG. 6B is performed.

If the first condition information includes location information and time information, the location information is coordinate information, and the time information is use duration information, S310b, S311b, and S310e are performed. In addition, if coordinates of the UE are not within a coordinate range in which the first service is available and indicated by the coordinate information, and/or if duration of a first timer is greater than duration in which the first service is available and indicated by the use duration information, S313 in FIG. 6A and FIG. 6B is performed.

If the first condition information includes location information and time information, the location information is cell identifier information, and the time information is time period information, S310c, S311c, and S310d are performed. In addition, if a cell in which the UE is located is not within a range in which the first service is available and indicated by the cell identifier information, and/or current time is not within a time period range in which the first service is available and indicated by the time period information, S313 in FIG. 6A and FIG. 6B is performed.

If the first condition information includes location information and time information, the location information is cell identifier information, and the time information is time period information, S310c, S311c, and S310e are performed. In addition, if a cell in which the UE is located is not within a range in which the first service is available and indicated by the cell identifier information, and/or if duration of a first timer is greater than duration in which the first service is available and indicated by the use duration information, S313 in FIG. 6A and FIG. 6B is performed.

S313: The AMF sends indication information 2 to the SMF, where the indication information 2 indicates that the first parameter of the first service does not meet the first condition.

The indication information 2 may be the same or may be different for the foregoing different cases. That is, the indication information 2 indicates, to the SMF, that the first parameter does not meet the first condition, or specifically indicates a parameter that meets the corresponding first condition.

The first information in the method 200 may be the indication information 2. That is, if the first parameter of the UE does not meet the first condition after establishment or modification of the session is completed, the AMF may send the indication information to the SMF.

Optionally, the AMF may alternately send the service identifier of the first service to the SMF. For example, in S313, the AMF sends the indication information 2 and the service identifier of the first service to the SMF, to indicate that the indication information 2 indicates that the first parameter of the first service identified by the service identifier does not meet the first condition. That is, the AMF may send the service identifier of the first service to the SMF, or may not send the service identifier of the first service. If the AMF does not send the service identifier of the first service, the SMF may know the first service in another manner.

S314: The SMF sends a first instruction to the UPF based on the indication information 2, where the first instruction indicates the UPF to stop sending the first service to the UE.

Optionally, the SMF may alternatively send the service identifier of the first service to the UPF. For example, in S314, the SMF sends the first instruction and the service identifier of the first service to the UPF, where the first instruction indicates the UPF to stop sending, to the UE, the first service identified by the service identifier. That is, if determining that the UPF can know the first service, the SMF may not send the service identifier of the first service. If determining that the UPF cannot know the first service, the SMF may send the service identifier of the first service.

Optionally, if the session request message in S303 includes the service identifier of the first service, the session established or the session modified in S309 may be the session corresponding to the first service. In this case, after S314, the method further includes: The SMF may further send third information to the UPF, where the third information is used to release the session in S309. That is, if the SMF determines that the first service corresponding to the session does not meet the condition, S315 may be performed.

Optionally, if the session request message in S303 includes the service identifier of the first service and the service identifier of the second service, the session established or the session modified in S309 may be the session corresponding to the first service and the second service. If determining, based on a process similar to this processing process of the first service, that the second parameter of the second service does not meet a second condition indicated by the second condition information of the second service, the AMF may further send indication information 3 to the SMF. In this case, the second information in the method 200 may be the indication information 3, and the indication information 3 indicates that a second parameter of the second service does not meet the second condition. The SMF sends a second instruction to the UPF based on the indication information 3, where the second instruction indicates the UPF to stop sending the second service to the UE. In this case, the SMF may alternatively send third information to the UPF, where the third information is used to release the session in S309. That is, if the SMF determines that neither the first service nor the second service corresponding to the session meets the condition, S315 may be performed.

S315: Release the session.

Optionally, if the first condition information includes the location information and the time information, the AMF determines a location and time in FIG. 6A and FIG. 6B. In some embodiments, the AMF determines the location, and the SMF determines the time. For example, the SMF performs S310d and S311d, or performs S310e, S311e, and S312e. Alternatively, the AMF determines the time, and the SMF determines the location. For example, the SMF performs S310a and S311a, or performs S310b, S311b, and S312b, or performs S310c, S311c, and S312c.

Optionally, in the methods 300 in FIG. 4A, FIG. 4B, FIG. 6A, and FIG. 6B, after S304 is performed, S309 and the steps in FIG. 6A and FIG. 6B may be directly performed. That is, the steps between S304 and S309 may not exist. It is considered by default that when the UE sends the session request message, the first parameter of the UE meets the first condition. Optionally, the steps between S304 and S309 may alternatively exist, for indicating that the AMF first determines whether the first parameter of the UE meets the first condition before the session is established or modified. If the first parameter of the UE does not meet the first condition, the AMF may directly send the session reject message, and no subsequent execution process after S308a exists. Optionally, the steps in FIG. 6A and FIG. 6B may alternatively be optional steps, that is, only S301 to S309 in FIG. 4A and FIG. 4B may exist. That is, after the session is established or modified after S309, the steps in FIG. 6A and FIG. 6B may not exist, that is, whether the first parameter of the UE meets the first condition is no longer determined. Alternatively, the steps in FIG. 6A and FIG. 6B may exist, for indicating that after the session is established or modified, the AMF continues to determine whether the first parameter of the UE meets the first condition. If the first parameter of the UE does not meet the first condition, the AMF sends the indication information 2 to the SMF, to indicate that the first parameter of the UE does not meet the first condition, and the SMF may send the first instruction to the UPF, to indicate to stop sending the first service to the UE.

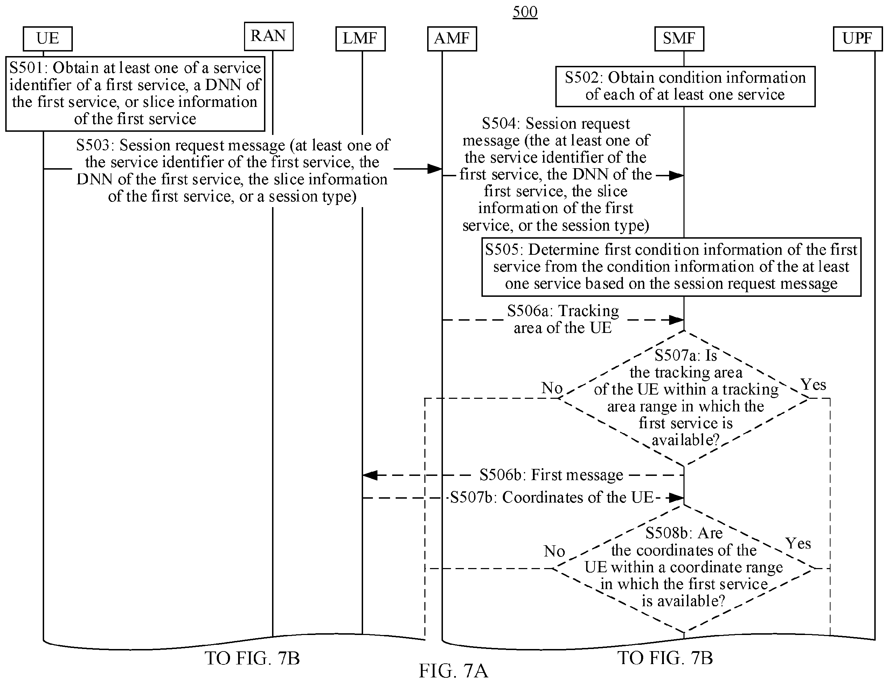

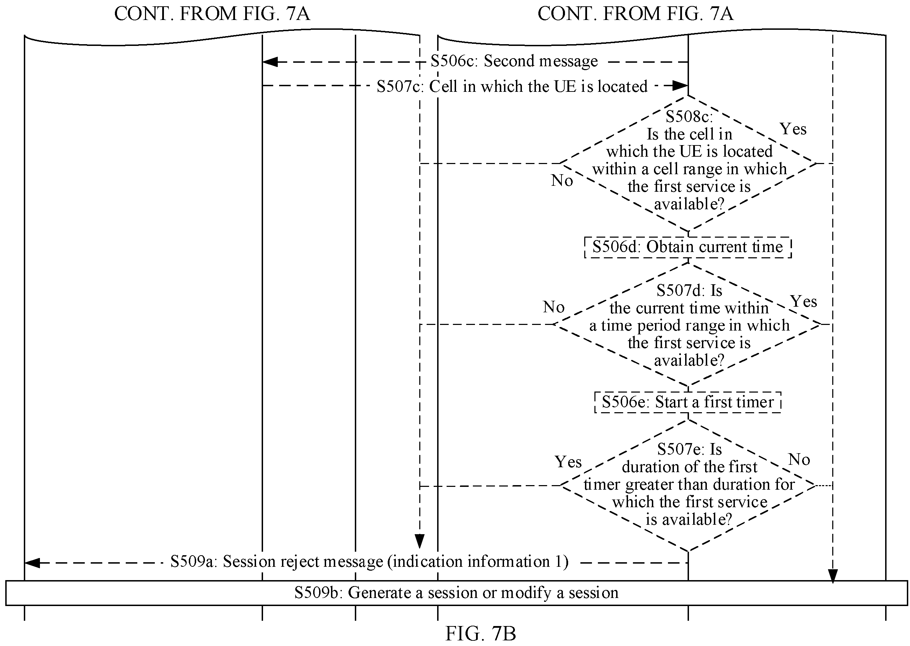

In some embodiments, to better describe the method 200, the following provides descriptions with reference to a method 500 shown in FIG. 7A and FIG. 7B. The first core network device may be an SMF in FIG. 7A and FIG. 7B, and the terminal device may be UE. The method 500 includes:
S501 that is the same as S301.
S502: The SMF obtains condition information of each of at least one service.

Optionally, a manner in which the SMF obtains the condition information of each of the at least one service is similar to the manner in which the AMF obtains the condition information of each of the at least one service in the method 300. To avoid repetition, details are not described in embodiments of this application.

Optionally, the AMF may obtain the condition information of each of the at least one service according to the method 300, and then send the condition information of each of the at least one service to the AMF, for example, send the condition information of each of the at least one service in the session message in S504.

It needs to be noted that there is no limitation on a sequence between S501 and S502, and S501 may be performed before, after, or at the same time of S502.

S503 is the same as S303.

S504: The AMF sends a session request message to the SMF, where the session request message includes at least one of a service identifier of a first service, a DNN of the first service, slice information of the first service, or a session type.

Specifically, for descriptions of the session request message, refer to descriptions in S303. To avoid repetition, details are not described again.

S505: The SMF determines first condition information of the first service from the condition information of the at least one service based on the session request message.

Optionally, alternatively, S505 may not exist. In this case, after determining the first condition information of the first service based on S304 in the method 300, the AMF may send the first condition information of the first service to the SMF in S504. In this way, the SMF may not perform S502 and S502. In this case, the AMF performs S302 and S304.

If the first condition information includes location information, and the location information is tracking area information, the method 500 includes S506a.

S506a: The SMF obtains a tracking area of the UE from the AMF.

Optionally, before S506a, the SMF may send a tracking area request message to the AMF. S506a includes: The SMF receives a response message of the tracking area request message from the AMF, where the response message includes the tracking area of the UE.

That is, in this case, a first parameter is the tracking area of the UE.

S507a: If the tracking area of the UE is not within a tracking area range in which the first service is available and indicated by the tracking area information, perform S509a.

Optionally, if the tracking area of the UE is within a tracking area range in which the first service is available and indicated by the tracking area information, S509b is performed.

If the first condition information includes location information, and the location information is coordinate information, the method 500 includes S506b, S507b, and S508b.

S506b: The SMF sends a first message to an LMF, where the first message is for requesting coordinates of the UE.

The LMF is a location device corresponding to the UE, and the LMF may locate the UE based on the first message, to obtain the coordinates of the UE.

Optionally, S506b includes: The SMF sends a first message to the LMF via the AMF.

S507b: The LMF sends the coordinates of the UE to the SMF. The SMF receives the coordinates of the UE.

That is, in this case, a first parameter is the coordinates of the UE.

Optionally, S607b includes: The LMF sends the coordinates of the UE to the SMF via the AMF.

Optionally, in S607b, the LMF sends, to the SMF, indication information indicating the coordinates of the UE.

Optionally, the LMF may send the coordinates of the UE to the SMF via the AMF, and the SMF receives the coordinates of the UE via the AMF.

S508b: If the coordinates of the UE are not within a coordinate range in which the first service is available and indicated by the coordinate information, perform S509a.

Optionally, if the coordinates of the UE are within a coordinate range in which the first service is available and indicated by the coordinate information, S509b is performed.

If the first condition information includes location information, and the location information is cell identifier information, the method 500 includes S506c, S507c, and S508c.

S506c: The SMF sends a second message to a RAN. The RAN receives the second message from the SMF, where the second message is for requesting a cell in which the UE is located.

Optionally, S506c includes: The SMF sends the second message to the RAN via the AMF, and the RAN receives the second message via the AMF.

S507c: The RAN sends, to the SMF, the cell in which the UE is located. The SMF receives, from the RAN, the cell in which the UE is located.

That is, in this case, a first parameter is the cell in which the UE is located.

Optionally, in S507c, the SMF receives, from the RAN, indication information indicating the cell in which the UE is located.

Optionally, the RAN sends, to the SMF via the AMF, the cell in which the UE is located, and the SMF receives, from the RAN via the AMF, the cell in which the UE is located.

S508c: If the cell in which the UE is located is not within a cell range in which the first service is available and indicated by the cell identifier information, perform S509a.

Optionally, if the cell in which the UE is located is within a cell range in which the first service is available and indicated by the cell identifier information, S509b is performed.

If the first condition information includes time information, and the time information is time period information, the method 500 includes S506d and S507d.

S506d: The AMF obtains current time.

That is, in this case, a first parameter is the current time at which the AMF serves the UE with the first service.

S507d: If the current time is not within a time period range in which the first service is available and indicated by the time period information, perform S509a.

Optionally, if the current time is within a time period range in which the first service is available and indicated by the time period information, S509b is performed.

If the first condition information includes time information, and the time information is use duration information, the method 500 includes S506e and S507e.

S506e: The AMF starts a first timer to start timing.

Optionally, the first timer is a timer corresponding to the first service.

S507e. If duration of the first timer is greater than duration in which the first service is available and indicated by the use duration information, perform S509a.

That is, in this case, a first parameter is the duration of the first timer, and the duration of the first timer is duration for which the SMF serves the UE with the first service.

Optionally, if duration of the first timer is less than duration in which the first service is available and indicated by the use duration information, S509b is performed.

Optionally, if duration of the first timer is equal to duration in which the first service is available and indicated by the use duration information, S509a or S509b may be performed. This is not limited in embodiments of this application.

If the first condition information includes location information and time information, the location information is tracking area information, and the time information is time period information, S506a and S506d are performed. In addition, if a tracking area of the UE is not within a tracking area range in which the first service is available and indicated by the tracking area information, and/or current time is not within a time period range in which the first service is available and indicated by the time period information, S509a is performed.

If the first condition information includes location information and time information, the location information is tracking area information, and the time information is use duration information, S506a and S506e are performed. In addition, if a tracking area of the UE is not within a tracking area range in which the first service is available and indicated by the tracking area information, and/or if duration of a first timer is greater than duration in which the first service is available and indicated by the use duration information, S509a is performed.

If the first condition information includes location information and time information, the location information is coordinate information, and the time information is time period information, S506b, S507b, and S506d are performed. In addition, if coordinates of the UE are not within a coordinate range in which the first service is available and indicated by the coordinate information, and/or current time is not within a time period range in which the first service is available and indicated by the time period information, S509a is performed.

If the first condition information includes location information and time information, the location information is coordinate information, and the time information is use duration information, S506b, S507b, and S506e are performed. In addition, if coordinates of the UE are not within a coordinate range in which the first service is available and indicated by the coordinate information, and/or if duration of a first timer is greater than duration in which the first service is available and indicated by the use duration information, S509a is performed.

If the first condition information includes location information and time information, the location information is cell identifier information, and the time information is time period information, S506c, S507c, and S506d are performed. In addition, if a cell in which the UE is located is not within a range in which the first service is available and indicated by the cell identifier information, and/or current time is not within a time period range in which the first service is available and indicated by the time period information, S509a is performed.

If the first condition information includes location information and time information, the location information is cell identifier information, and the time information is time period information, S506c, S507c, and S506e are performed. In addition, if a cell in which the UE is located is not within a range in which the first service is available and indicated by the cell identifier information, and/or if duration of a first timer is greater than duration in which the first service is available and indicated by the use duration information, S509a is performed.

If the first condition information includes activation information, and the activation information indicates that a state of the first service is an active state, the SMF sends the service identifier of the first service to the UDM, and the UDM determines the activation information corresponding to the service identifier and whether the first service is activated, and sends the activation information to the AMF and indicates whether the first service is activated. If the first service is not activated, S509a may be performed. If the first service is activated, S509b may be performed. That is, the UDM may not only store the activation information of the first service, but also store whether the first service is activated. This process is not shown in FIG. 7A and FIG. 7B.

If the first condition information includes element quantity information, and the element quantity information indicates a range of quantities of elements that can be supported by the first service, the session request message in S503 may include a quantity of elements currently supported by the first service. If the quantity of elements currently supported by the first service is within the range of quantities, S509b may be performed. If the quantity of elements currently supported by the first service is not within the range of quantities, S509a may be performed. This process is not shown in FIG. 7A and FIG. 7B.

S509a: The SMF sends a session reject message to the UE, where the session reject message includes indication information 1, and the indication information 1 indicates the UE to stop obtaining the first service.

The first information in the method 200 may be the indication information 1. That is, if a first parameter of the UE does not meet a first condition in a process of establishing or modifying a session, the session is not established or modified, and a subsequent step after S509a is also ended.

S509b: Generate a session or modify a session based on the session request message.

For a manner of generating the session or modifying the session based on the session request message in S309, refer to descriptions in a conventional technology. To avoid repetition, no detailed example is provided.

Optionally, if the first condition information includes the location information and the time information, the SMF determines a location and time in FIG. 7A and FIG. 7B. In some embodiments, the AMF determines the location, and the SMF determines the time. For example, the AMF performs S506a and S507a, performs S506b, S507b, and S508b, or performs S506c, S507c, and S508c. Alternatively, the AMF determines the time, and the SMF determines the location. For example, the AMF performs S506d and S507d, or performs S506e and S507e.

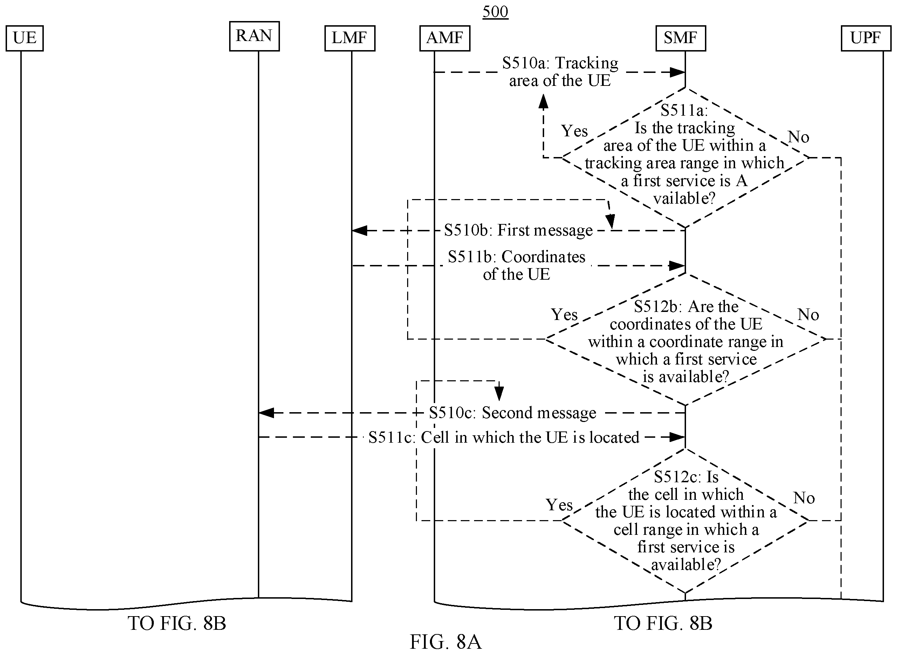

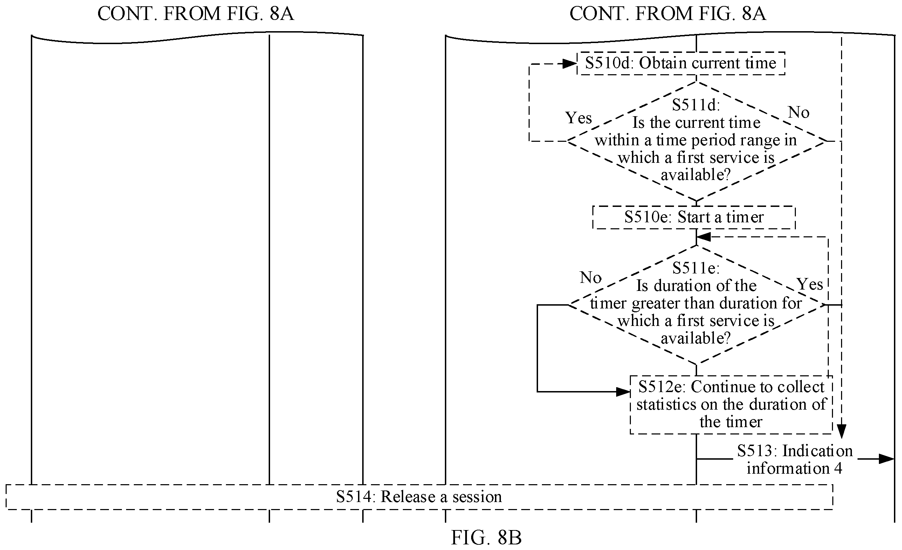

As shown in FIG. 8A and FIG. 8B, the method 500 further includes:
S510a to S512e, which are respectively similar to S310a to S312e. To avoid repetition, details are not described again.

S513: An SMF sends indication information 4 to a UPF, where the indication information 4 indicates the UPF to stop sending the first service to UE.

The first information in the method 200 may be the indication information 4. That is, if a first parameter of the UE does not meet a first condition after establishment or modification of a session is completed, the SMF may send, to the UPF, the indication information 4 for stopping sending the first service to the UE.

Optionally, the SMF may alternatively send a service identifier of the first service to the UPF. For example, in S513, the SMF sends a first instruction and the service identifier of the first service to the UPF, where the first instruction indicates the UPF to stop sending, to the UE, the first service identified by the service identifier. That is, if determining that the UPF can know the first service, the SMF may not send the service identifier of the first service. If determining that the UPF cannot know the first service, the SMF may send the service identifier of the first service.

Optionally, if the session request message in S503 includes the service identifier of the first service, the session established or the session modified in S509b may be the session corresponding to the first service. In this case, after S513, the method further includes: The SMF may further send third information to the UPF, where the third information is used to release the session in S309b. That is, if the SMF determines that the first service corresponding to the session does not meet the condition, S514 in FIG. 8A and FIG. 8B may be performed.

Optionally, if the session request message in S503 includes the service identifier of the first service and a service identifier of a second service, the session established or the session modified in S509b may be a session corresponding to the first service and the second service. If determining, based on a process similar to this processing process of the first service, that a second parameter of the second service does not meet a second condition indicated by second condition information of the second service, the SMF may further send indication information 5 to the UPF, where the indication information 5 indicates the UPF to stop sending the second service to the UE. In this case, the SMF may alternatively send third information to the UPF, where the third information is used to release the session in S509b. That is, if the SMF determines that neither the first service nor the second service corresponding to the session meets the condition, S514 in FIG. 8A and FIG. 8B may be performed.

S514: Release the session.

Optionally, if the first condition information includes location information and time information, the SMF determines a location and time in FIG. 8A and FIG. 8B. In some embodiments, an AMF determines the location, and the SMF determines the time. For example, the AMF performs S510a and S511a, performs S510b, S511b, and S512b, or performs S510c, S511c, and S512c. Alternatively, the AMF determines the time, and the SMF determines the location. For example, the AMF performs S510d and S511d, or performs S510e, S511e, and S512e.

Optionally, in the methods 500 in FIG. 7A, FIG. 7B, FIG. 8A, and FIG. 8B, after S505 is performed, S509b and the steps in FIG. 8A and FIG. 8B may be directly performed. That is, the steps between S505 and S509b may not exist. It is considered by default that when the UE sends the session request message, the first parameter of the UE meets the first condition. Optionally, the steps between S505 and S509b may alternatively exist, for indicating that the SMF first determines whether the first parameter of the UE meets the first condition before the session is established or modified. If the first parameter of the UE does not meet the first condition, the SMF may directly send the session reject message, and no subsequent execution process after S509a exists. Optionally, the steps in FIG. 8A and FIG. 8B may alternatively be optional steps, that is, only S501 to S509b in FIG. 7A and FIG. 7B may exist. That is, after the session is established or modified after S509b, whether the first parameter of the UE meets the first condition may no longer be determined. Alternatively, the steps in FIG. 8A and FIG. 8B may exist, for indicating that after the session is established or modified, the SMF continues to determine whether the first parameter of the UE meets the first condition. If the first parameter of the UE does not meet the first condition, the SMF sends the indication information 4 to the UPF, to indicate the UPF to stop sending the first service to the UE.

Optionally, S301 to S309 in FIG. 4A and FIG. 4B and S510a to S514 in FIG. 8A and FIG. 8B may form an embodiment. To be specific, before the session is established, the AMF determines whether the first parameter of the UE meets the first condition, and after the session is established, the SMF determines whether the first parameter of the UE meets the first condition.

Optionally, S310a to S315 in FIG. 6A and FIG. 6B and S501 to S509b in FIG. 7A and FIG. 7B may form an embodiment. To be specific, before the session is established, the SMF determines whether the first parameter of the UE meets the first condition, and after the session is established, the AMF determines whether the first parameter of the UE meets the first condition.

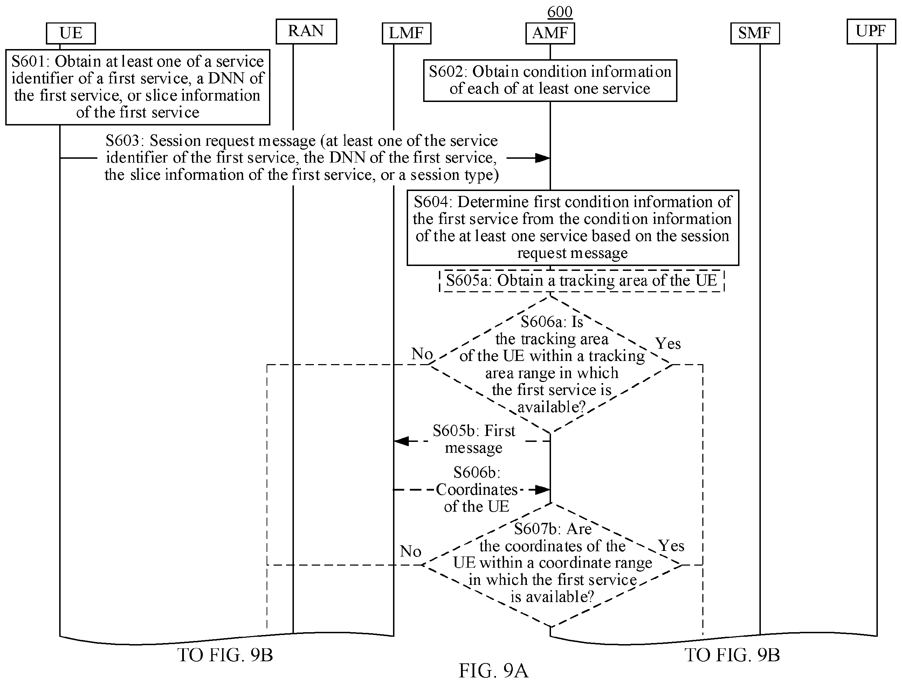

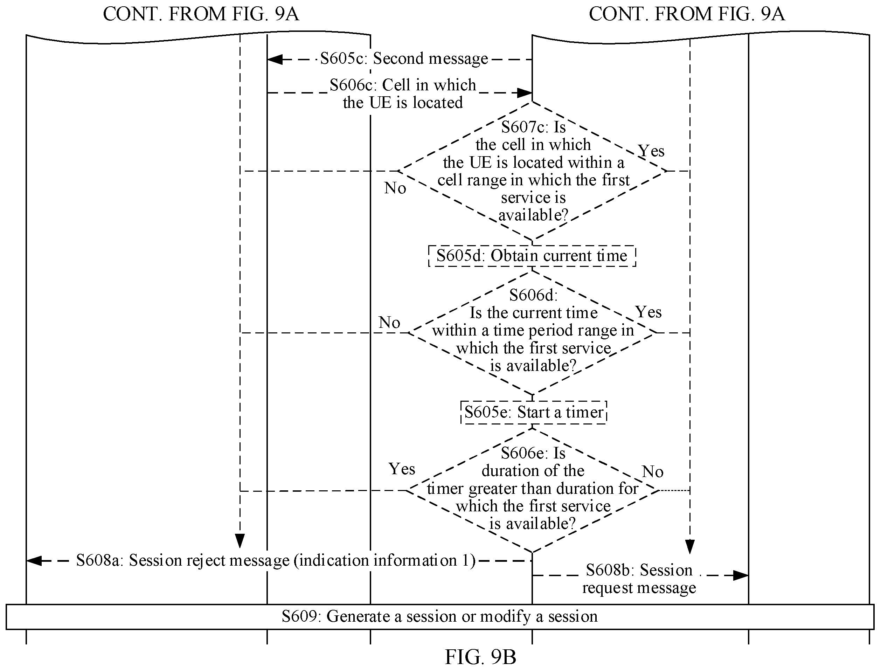

In some embodiments, the AMF may determine whether the first parameter of the UE meets the first condition before the session is established or modified, and may also determine whether the first parameter of the UE meets the first condition after the session is established or modified. If determining that the first parameter does not meet the first condition after the session is established or modified, the AMF may send the first information to the PCF to indicate that the first service for the UE does not meet the first condition. The following provides descriptions with reference to FIG. 9A and FIG. 9B. As shown in FIG. 9A and FIG. 9B, the method 600 includes:
S601 to S609, which are respectively the same as S301 to S309 in FIG. 4A and FIG. 4B. To avoid repetition, details are not described again.

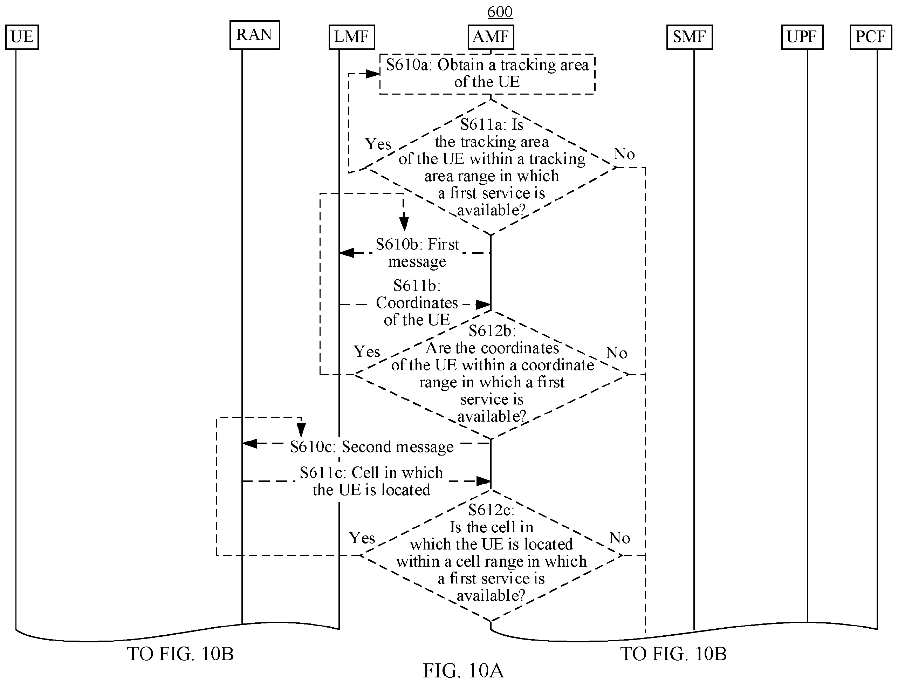

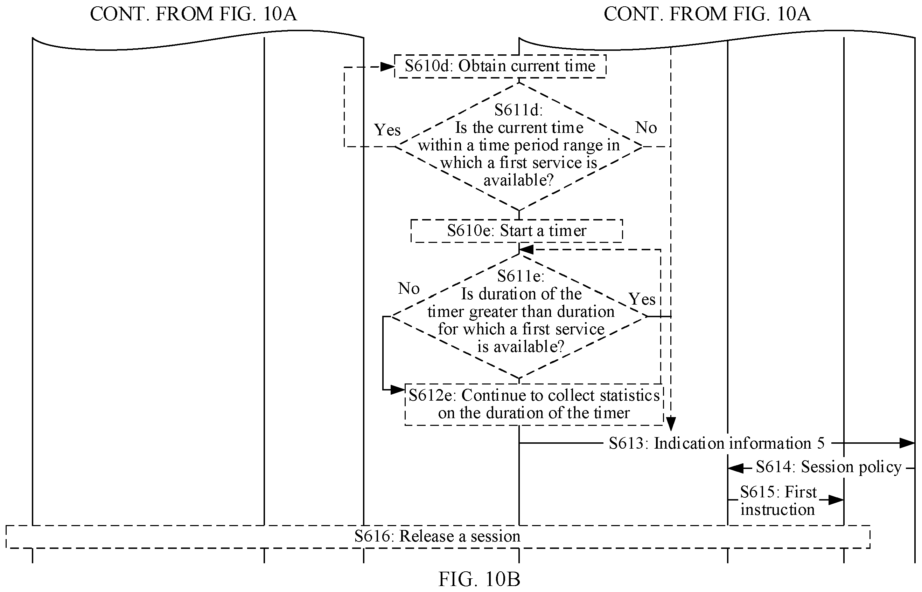

As shown in FIG. 10A and FIG. 10B, the method 600 further includes:
S610a to S612e, which are respectively the same as S310a to S312e shown in FIG. 6A and FIG. 6B. To avoid repetition, details are not described again.

S613: An AMF sends indication information 5 to a PCF, where the indication information 5 indicates that a first service of UE does not meet a first condition.

Optionally, the AMF may further send a service identifier of the first service to the PCF. The service identifier of the first service is related to the indication information 5. In this case, the indication information 5 indicates that the first service identified by the service identifier of the UE does not meet the first condition. In other words, a function of the service identifier of the first service is to enable the PCF to determine which service does not meet the first condition.

Optionally, the first information in the method 200 may be the indication information 5.

Optionally, before S613, the method further includes: The PCF sends a seventh message to an SMF, where the seventh message is used to subscribe to whether the first service meets the first condition. Optionally, the seventh message may be a state subscription message.

S614: The PCF generates a session policy based on the indication information 5.

Optionally, the session policy is used by the SMF to determine to stop sending the first service to the UE. That is, the PCF triggers, according to the generated policy, the SMF to perform S615.

Optionally, the session policy may be a terminal device route selection policy (UE route selection policy, URSP) or a personal internet of things network route selection policy (PIN route selection policy, PRSP). The URSP or the PRSP may include a PIN ID. For example, a traffic descriptor (traffic descriptor) of the URSP or a personal internet of things network descriptor (PIN descriptor) of the PRSP may include the PIN ID. The PCF triggers the SMF to perform S615 according to the generated terminal device route selection policy or the generated personal internet of things network route selection policy.

S615 and S616 are respectively the same as S314 and S315.

Optionally, in embodiments of this application, the first service is a localized service. Optionally, in embodiments of this application, the first service is a PIN-related service.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the method embodiments. For brevity, details are not described herein again.

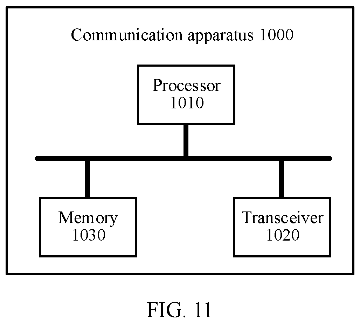

FIG. 11 shows a communication apparatus 1000 according to an embodiment of this application. The communication apparatus 1000 includes a processor 1010 and a transceiver 1020. The processor 1010 and the transceiver 1020 communicate with each other through an internal connection path. The processor 1010 is configured to execute instructions, to control the transceiver 1020 to send a signal and/or receive a signal.

Optionally, the communication apparatus 1000 may further include a memory 1030. The memory 1030 communicates with the processor 1010 and the transceiver 1020 through the internal connection path. The memory 1030 is configured to store the instructions, and the processor 1010 may execute the instructions stored in the memory 1030. In a possible implementation, the communication apparatus 1000 is configured to implement procedures and operations corresponding to the first core network device in the method 200 or the AMF in the method 300. In a possible implementation, the communication apparatus 1000 is configured to implement procedures and operations corresponding to the first core network device in the method 200 or the SMF in the method 500. In a possible implementation, the communication apparatus 1000 is configured to implement procedures and operations corresponding to the SMF in the method 300 or the SMF in the method 600. In a possible implementation, the communication apparatus 1000 is configured to implement procedures and operations corresponding to the UE in the method 300, the method 500, or the method 600. In a possible implementation, the communication apparatus 1000 is configured to implement procedures and operations corresponding to the AMF in the method 300. In a possible implementation, the communication apparatus 1000 is configured to implement procedures and operations corresponding to the PCF in the method 600.

It should be understood that the communication apparatus 1000 may be specifically each device in the foregoing embodiments, or may be a chip or a chip system. Correspondingly, the transceiver 1020 may be a transceiver circuit of the chip. This is not limited herein. Specifically, the communication apparatus 1000 may be configured to perform operations and/or procedures corresponding to the devices in the foregoing method embodiments. Optionally, the memory 1030 may include a read-only memory and a random access memory, and provide instructions and data for the processor. A part of the memory may further include a nonvolatile random access memory. For example, the memory may further store information about a device type. The processor 1010 may be configured to execute the instructions stored in the memory. In addition, when the processor 1010 executes the instructions stored in the memory, the processor 1010 is configured to perform operations and/or procedures corresponding to the devices in the foregoing method embodiments.

In an implementation process, the operations in the foregoing methods may be completed by using a hardware integrated logical circuit in the processor or instructions in a form of software. The operations in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the operations in the foregoing methods in combination with the hardware of the processor. To avoid repetition, details are not described herein again.

It should be noted that, the processor in embodiments of this application may be an integrated circuit chip, and has a signal processing capability. In an implementation process, the operations in the foregoing method embodiments may be completed by using the hardware integrated logical circuit in the processor or the instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the operations, and logical block diagrams that are disclosed in embodiments of this application. The general-purpose processor may be a microprocessor, or the processor may be any conventional processor, or the like. The operations in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the operations in the foregoing methods in combination with the hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

According to the methods provided in embodiments of this application, this application further provides a computer program product. The computer program product includes computer program code. When the computer program code is run on a computer, the computer is enabled to perform operations or procedures performed by the devices in the foregoing method embodiments.

According to the methods provided in embodiments of this application, this application further provides a computer-readable storage medium. The computer-readable storage medium stores program code. When the program code is run on a computer, the computer is enabled to perform operations or procedures performed by the devices in the foregoing method embodiments.

According to the methods provided in embodiments of this application, this application further provides a communication system, including at least two of the foregoing plurality of devices.

Descriptions of the foregoing apparatus embodiments completely correspond to descriptions of the foregoing method embodiments. A corresponding module or unit performs a corresponding operation. For example, a communication unit (a transceiver) performs a receiving operation or a sending operation in the method embodiments, and a processing unit (a processor) may perform an operation other than the sending operation or the receiving operation. For a function of a specific unit, refer to a corresponding method embodiment. There may be one or more processors.

In embodiments of this application, the terms and English abbreviations are all examples given for ease of description, and should not constitute any limitation on this application. This application does not exclude a possibility of defining another term that can implement a same or similar function in an existing or a future protocol.

It should be understood that "and/or" in this specification describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects.

A person of ordinary skill in the art may be aware that the illustrative logical blocks (illustrative logical blocks) and the operations described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located at one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

In the foregoing embodiments, all or some of the functions of the functional units may be implemented by software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the operations in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method is applicable to a first core network device, and comprises:
obtaining first condition information of a first service, wherein the first condition information indicates a first condition for obtaining the first service;
obtaining a first parameter of a terminal device, wherein the first parameter corresponds to the first condition information of the first service; and
sending first information when the first parameter does not meet the first condition, wherein the first information is used to stop the terminal device from obtaining the first service.

2. The communication method according to claim 1, wherein the first condition information comprises time information and/or location information.

3. The communication method according to claim 2, wherein the first condition information comprises the location information, and the location information is tracking area information, coordinate information, or cell identifier information.

4. The communication method according to claim 3, wherein when the location information is the coordinate information, the first condition comprises a coordinate range in which the first service is available;
the obtaining a first parameter of a terminal device comprises:
sending a first message to a location management device, wherein the first message is used to obtain coordinates of the terminal device; and
obtaining the coordinates of the terminal device from the location management device, wherein the first parameter comprises the coordinates of the terminal device; and
the sending first information when the first parameter does not meet the first condition comprises:
sending the first information when the coordinates of the terminal device are not within the coordinate range in which the first service is available.

5. The communication method according to claim 3, wherein when the location information is the cell identifier information, the first condition comprises a cell range in which the first service is available;
the obtaining a first parameter of a terminal device comprises:
sending a second message to an access network device corresponding to the terminal device, wherein the second message is for requesting a cell in which the terminal device is located; and
obtaining, from the access network device, the cell in which the terminal device is located, wherein the first parameter comprises the cell in which the terminal device is located; and
the sending first information when the first parameter does not meet the first condition comprises:
sending the first information if the cell in which the terminal device is located is not within the cell range in which the first service is available.

6. The communication method according to claim 3, wherein when the location information is the tracking area information, the first condition comprises a tracking area range in which the first service is available;
the obtaining a first parameter of a terminal device comprises:
sending a third message to a mobility management device corresponding to the terminal device, wherein the third message is for requesting a tracking area of the terminal device; and
obtaining the tracking area of the terminal device from the mobility management device, wherein the first parameter comprises the tracking area of the terminal device; and
the sending first information when the first parameter does not meet the first condition comprises:
sending the first information when the tracking area of the terminal device is not within the tracking area range in which the first service is available.

7. The communication method according to any one of claims 2 to 6, wherein the first condition information comprises the time information, and the time information is time period information or use duration information.

8. The communication method according to claim 7, wherein when the time information is the time period information, and the first condition comprises a time period range in which the first service is available, the first parameter comprises current time at which the first core network device serves the terminal device with the first service; and
the sending first information when the first parameter does not meet the first condition comprises:
sending the first information when the current time at which the first core network device serves the terminal device with the first service is not within the time period range in which the first service is available.

9. The communication method according to claim 7, wherein when the time information is the use duration information, the first condition comprises duration for which the first service is available;
the obtaining a first parameter of a terminal device comprises:
starting a first timer, wherein the first timer is used to obtain duration for which the terminal device uses the first service, and the first parameter comprises the duration for which the terminal device uses the first service; and
the sending first information when the first parameter does not meet the first condition comprises:
sending the first information when the duration for which the terminal device uses the first service is greater than the duration for which the first service is available.

10. The communication method according to any one of claims 1 to 9, wherein the communication method further comprises:
obtaining a session request message, wherein the session request message comprises at least one of a data network name, slice information, a session type, or a service identifier of the first service; and
the obtaining first condition information of a first service comprises:
obtaining the first condition information of the first service based on the session request message.

11. The communication method according to claim 10, wherein the session request message further comprises the first condition information of the first service.

12. The communication method according to claim 10, wherein if the session request message comprises the service identifier of the first service,
the obtaining the first condition information of the first service based on the session request message comprises:
obtaining the first condition information of the first service based on the service identifier of the first service in the session request message.

13. The communication method according to claim 12, wherein the communication method further comprises:
sending a fourth message to a unified data management device, wherein the fourth message is used to subscribe to condition information of a service from the unified data management device; and
receiving condition information of each of at least one service from the unified data management device, wherein each service corresponds to one piece of condition information; and
the obtaining the first condition information of the first service based on the service identifier of the first service in the session request message comprises:
determining the condition information of the first service from the condition information of each of the at least one service based on the service identifier of the first service in the session request message.

14. The communication method according to claim 12, wherein if the first core network device is a mobility management device, the method further comprises:
receiving a fifth message from the terminal device, wherein the fifth message is used to register with a core network that provides the first service, and the fifth message comprises the service identifier of the first service;
sending a sixth message to a unified data management device, wherein the sixth message is for requesting the first condition information of the first service identified by the service identifier of the first service; and
obtaining, from the unified data management device, the first condition information of the first service identified by the service identifier; and
the obtaining the first condition information of the first service based on the service identifier of the first service in the session request message comprises:
determining the first condition information of the first service corresponding to the service identifier of the first service in the session request message.

15. The communication method according to any one of claims 1 to 14, wherein if the first core network device is a mobility management device,
the sending first information comprises:
sending the first information to a session management device or a policy management device, wherein the first information specifically indicates that the first service for the terminal device does not meet the first condition.

16. The communication method according to claim 15, wherein the communication method further comprises:
sending the service identifier of the first service to the session management device or the policy management device, wherein the first information specifically indicates that the first service identified by the service identifier does not meet the first condition.

17. The communication method according to claim 15 or 16, wherein the communication method further comprises:
receiving a seventh message sent by the policy management device, wherein the seventh message is used to subscribe to whether the first service identified by the service identifier meets the first condition, and the first core network device is configured to send the first information to the policy management device.

18. The communication method according to any one of claims 1 to 11, wherein if the first core network device is a session management device, the communication method further comprises:
the sending first information comprises:
sending the first information to a user plane device, wherein the first information specifically indicates the user plane device to stop sending the first service to the terminal device.

19. The communication method according to claim 18, wherein the communication method further comprises:
sending the service identifier of the first service to the user plane device, wherein the first information specifically indicates the user plane device to stop sending, to the terminal device, the first service identified by the service identifier.

20. The communication method according to any one of claims 10 to 13, 18, or 19, wherein the session request message further comprises a service identifier of a second service, and the session request message is used to establish a session for the first service and the second service.

21. The communication method according to claim 20, wherein the communication method further comprises:
sending second information to the user plane device, wherein the second information indicates the user plane device to stop sending, to the terminal device, the second service identified by the service identifier of the second service; and
if services corresponding to the session are the first service and the second service, the method further comprises:
sending third information to the user plane device, wherein the third information is used to release the session.

22. The communication method according to any one of claims 1 to 10, wherein if the first core network device is a session management device, the obtaining first condition information of a first service comprises:
receiving the first condition information of the first service from a mobility management device.

23. The communication method according to any one of claims 1 to 22, wherein the first service is a personal internet of things network PIN-related service.

24. A communication method, wherein the method is applicable to a session management device, and comprises:
receiving first information from a mobility management device, wherein the first information indicates that a first service for a terminal device does not meet a first condition; and
sending a first instruction to a user plane device based on the first information, wherein the first instruction indicates the user plane function device to stop sending the first service to the terminal device.

25. The communication method according to claim 24, wherein the communication method further comprises:
receiving a service identifier of the first service from the mobility management device, wherein the first information specifically indicates that the first service identified by the service identifier does not meet the first condition.

26. The communication method according to claim 24 or 25, wherein the communication method further comprises:
receiving second information from the mobility management device, wherein the second information indicates that a second service for the terminal device does not meet a second condition; and
sending a second instruction to the user plane device based on the second information, wherein the second instruction indicates the user plane device to stop sending the second service to the terminal device; and
if services corresponding to a session are the first service and the second service, the communication method further comprises:
sending third information to the user plane device, wherein the third information is used to release the session.

27. The communication method according to any one of claims 24 to 26, wherein the first service is a personal internet of things network PIN-related service.

28. A communication apparatus, comprising a processor, wherein the processor is coupled to a memory, and the processor is configured to execute a computer program or instructions stored in the memory, to enable the communication apparatus to implement the communication method according to any one of claims 1 to 27.

29. A computer-readable storage medium, wherein the computer-readable storage medium stores computer instructions, and when the computer instructions are run on an electronic device, the electronic device is enabled to perform the communication method according to any one of claims 1 to 27.
